# EUROPEAN PATENT APPLICATION

(11) **EP 4 742 610 A1**
(43) Date of publication of application: **13.05.2026**
(21) Application number: 24847957.8
(22) Date of filing: 08.07.2024
(51) Int. Cl.: H04L 41/082

(54) **COMMUNICATION METHOD AND APPARATUS**

(30) Priority: 31.07.2023 CN 202310960641; 03.04.2024 CN 202410408362
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN)
(74) Representative: Gill Jennings & Every LLP
(86) International application number: PCT/CN2024/104287
(87) International publication number: WO 2025/025998

(57) **Abstract**

This application provides a communication method and apparatus, and relates to the field of communication technologies. This application can simplify a quality of service QoS configuration update process. The method includes: An access network device determines, in a process of performing transmission of a service over a quality of service QoS flow, that a service feature of the service is updated. An updated service feature is used to determine a target QoS configuration of the QoS. Alternatively, the access network device receives first information from a terminal device or a first core network device in the service transmission process. The first information is used to determine the target QoS configuration of the QoS flow. The access network device updates a QoS configuration of the QoS flow based on the target QoS configuration.

## Description

This application claims priorities to Chinese Patent Application No. 202310960641.0, filed with the China National Intellectual Property Administration on July 31, 2023 and entitled "COMMUNICATION METHOD AND APPARATUS", and to Chinese Patent Application No. 202410408362.8, filed with the China National Intellectual Property Administration on April 3, 2024 and entitled "COMMUNICATION METHOD AND APPARATUS", both of which are incorporated herein by reference in their entireties.

### TECHNICAL FIELD

This application relates to the communication field, and in particular, to a communication method and apparatus.

### BACKGROUND

In a communication system, a quality of service flow (quality of service flow, QoS flow) is a finest QoS differentiation granularity in a protocol data unit (protocol data unit, PDU) session, and is used to carry a service flow in the PDU session. A network requirement corresponding to a service may dynamically change. For example, a media data volume dynamically changes due to a difference in media content complexity in different game scenarios in a cloud game. Therefore, a QoS configuration corresponding to the QoS flow also needs to be dynamically adjusted, to meet the dynamically changing service requirement.

However, an existing QoS configuration adjustment process is complex. Multiple interactions with a core network are required, and signaling exchange is complex. Consequently, it is difficult to meet the dynamically changing service requirement.

### SUMMARY

To resolve the foregoing technical problem, this application provides a communication method and apparatus, to simplify a QoS configuration update process. To achieve the foregoing objective, the following technical solutions are used in this application.

According to a first aspect, a communication method is provided. An execution body of the method may be an access network device, or may be a part (for example, a processor, a chip, or a chip system) used in the access network device, or may be a logical module or software that can implement a part or all of functions of the access network device. An example in which the execution body is the access network device is used below for description. The method includes: The access network device determines, in a process of performing transmission of a service over a quality of service QoS flow, that a service feature of the service is updated. An updated service feature is used to determine a target QoS configuration of the QoS flow. Alternatively, the access network device receives first information from a terminal device or a first core network device in the service transmission process. The first information is used to determine the target QoS configuration of the QoS flow. The access network device updates a QoS configuration of the QoS flow based on the target QoS configuration.

For example, the first information indicates the target QoS configuration of the QoS flow.

For another example, the first information includes information about the target QoS configuration of the QoS flow. For example, in the target QoS configuration, a delay is 10 ms. The first information includes information indicating that the delay is 10 ms.

For still another example, the first information includes QoS requirement information corresponding to the target QoS configuration of the QoS flow. For example, in the target QoS configuration, a delay is 10 ms. Correspondingly, the QoS requirement information corresponding to the target QoS configuration is that the delay of the service needs to be within 10 ms. The first information includes the QoS requirement information that the delay needs to be within 10 ms.

That the access network device updates the QoS configuration of the QoS flow may be understood as that the access network device activates or establishes the QoS configuration of the QoS flow.

To be specific, in the service transmission process, when the access network device determines that the service feature of the service is updated or receives the first information, the access network device updates the QoS configuration of the QoS flow, to dynamically adjust the QoS configuration of the QoS flow in the service transmission process. Compared with a complex procedure, in a multi-level QoS mechanism, in which the access network device is configured to trigger a QoS configuration update and the QoS configuration can be adjusted through only a QoS notification control procedure and a protocol data unit PDU session modification procedure, in this application, the access network device can independently perform a fast QoS configuration update based on a service feature change of the service or the first information from the terminal device or the first core network device, to simplify a QoS configuration update process and effectively ensure a dynamically changing service requirement.

In a possible design, the method further includes: The access network device determines the target QoS configuration of the QoS flow based on the updated service feature or the first information.

In this way, when the target QoS configuration is determined based on the updated service feature, the updated QoS configuration of the QoS flow can also meet the dynamically changing service requirement. Alternatively, when the target QoS configuration is determined based on the first information, because the first information is provided by the terminal device or the first core network device for the access network device, the first information can also represent a dynamic change of the service feature of the service, and the updated QoS configuration of the QoS flow can also meet the dynamically changing service requirement.

In a possible design, that the access network device determines the target QoS configuration of the QoS flow includes: The access network device determines a QoS parameter that needs to be updated in the QoS configuration.

That is, the access network device determines the target QoS configuration by determining the QoS parameter that needs to be updated, to meet the dynamically changing service requirement.

In a possible design, that the access network device determines, based on the updated service feature, the QoS parameter that needs to be updated in the QoS configuration includes: The access network device determines a target QoS parameter in the QoS configuration based on the updated service feature. The target QoS parameter is an adjusted parameter of the QoS parameter that needs to be updated. The access network device determines the target QoS configuration based on the target QoS parameter.

In a possible design, that the access network device determines, based on the first information, the QoS parameter that needs to be updated in the QoS configuration includes: The access network device determines a target QoS parameter in the QoS configuration based on the first information. The target QoS parameter is an adjusted parameter of the QoS parameter that needs to be updated. The access network device determines the target QoS configuration based on the target QoS parameter.

In a possible design, the method further includes: The access network device receives multiple QoS configurations for the QoS flow from a second core network device. That the access network device determines the target QoS configuration of the QoS flow includes: The access network device determines the target QoS configuration in the multiple QoS configurations.

That is, the access network device determines the target QoS configuration in the multiple QoS configurations provided by the second core network device for the QoS flow, to simplify a processing process on a side of the access network device.

It may be understood as that the access network device receives multiple pre-authorized QoS configurations for the QoS flow from the second core network device, and when the service feature of the service is updated or the first information from the terminal device is received or the first information from the first core network device is received, the access network device determines the target QoS configuration in the multiple QoS configurations. In addition, if none of the multiple QoS configurations can meet the updated service feature or a QoS requirement corresponding to the first information, the access network device rejects to update the QoS configuration.

In a possible design, the method further includes: The access network device receives one or more QoS parameter adjustment ranges for the QoS flow from the second core network device. That the access network device determines the target QoS configuration of the QoS flow includes: The access network device determines the target QoS parameter in the one or more QoS parameter adjustment ranges. The access network device determines the target QoS configuration based on the target QoS parameter.

That is, the access network device obtains, from the second core network device, one or more pre-authorized QoS parameter adjustment ranges for the QoS flow. In addition, the access network device determines, based on the updated service feature or the first information from the terminal device or the first information from the first core network device, the QoS parameter that needs to be updated; determines the target QoS parameter within a QoS parameter adjustment range corresponding to the QoS parameter that needs to be updated; and determines the target QoS configuration based on the target QoS parameter. In addition, if none of QoS parameters within the one or more QoS parameter adjustment ranges can meet the updated service feature or a QoS requirement corresponding to the first information, the access network device rejects to update the QoS configuration.

In a possible design, the method further includes: The access network device sends second information to the terminal device and/or the first core network device. The second information indicates the target QoS configuration of the QoS flow, and the target QoS configuration indicated by the second information is determined by the access network device based on the updated service feature.

That is, when the access network device determines that the service feature of the service is updated, the access network device further indicates the target QoS configuration to the terminal device and/or the first core network device through the second information, so that the terminal device and/or the first core network device update/updates the QoS configuration of the QoS flow.

It may be understood as that when determining that the service feature of the service is updated, the access network device determines the target QoS configuration based on the updated service feature, and determines the second information based on the target QoS configuration. The second information indicates the target QoS configuration to the terminal device and/or the first core network device.

In a possible design, when the first information is from the first core network device, the method further includes: The access network device sends second information to the terminal device. The second information indicates the target QoS configuration of the QoS flow, and the target QoS configuration indicated by the second information is determined by the access network device based on the first information. Alternatively, the first information is the same as the second information. Alternatively, when the first information is from the terminal device, the method further includes: The access network device sends the second information to the first core network device. The second information indicates the target QoS configuration of the QoS flow, and the target QoS configuration indicated by the second information is determined by the access network device based on the first information. Alternatively, the first information is the same as the second information.

That is, when the first information is from the first core network device, it means that the first core network device triggers the access network device to update the QoS configuration. In this case, the access network device further indicates, through the second information, the terminal device to update the QoS configuration, to implement a fast QoS configuration update. Alternatively, when the first information is from the terminal device, it means that the terminal device triggers the access network device to update the QoS configuration. In this case, the access network device further indicates, through the second information, the first core network device to update the QoS configuration, to implement a fast QoS configuration update.

In a possible design, the access network device determines, based on the target QoS configuration or the target QoS parameter, whether to send the second information to the terminal device; or the access network device determines, based on the target QoS configuration or the target QoS parameter, whether to send the second information to the first core network device. For example, in the target QoS configuration, the QoS parameter that needs to be updated is delay information. Because the delay information (for example, a data packet delay budget (packet delay budget, PDB)) does not need to be updated on a side of the first core network device, the access network device does not need to send the second information to the first core network device.

In a possible design, when the access network device sends the second information to the terminal device, the method further includes: The access network device receives third information from the terminal device. The third information indicates that the terminal device successfully updates the QoS configuration of the QoS flow, and the terminal device updates the QoS configuration of the QoS flow based on the second information. Alternatively, when the access network device sends the second information to the first core network device, the method further includes: The access network device receives fourth information from the first core network device. The fourth information indicates that the first core network device successfully updates the QoS configuration of the QoS flow, and the first core network device updates the QoS configuration of the QoS flow based on the second information.

That is, when the access network device indicates, through the second information, the terminal device to update the QoS configuration, the access network device further receives the third information fed back by the terminal device, and learns, through the third information, that the QoS configuration on a side of the terminal device is successfully updated. Alternatively, when the access network device indicates, through the second information, the first core network device to update the QoS configuration, the access network device further receives the fourth information fed back by the first core network device, and learns, through the fourth information, that the QoS configuration on the side of the first core network device is successfully updated.

In a possible design, when the access network device receives the third information from the terminal device, the method further includes: The access network device sends fifth information to the first core network device. The fifth information indicates that the terminal device and/or the access network device successfully update/updates the QoS configuration of the QoS flow. Alternatively, when the access network device receives the fourth information from the first core network device, the method further includes: The access network device sends sixth information to the terminal device. The sixth information indicates that the first core network device and/or the access network device successfully update/updates the QoS configuration of the QoS flow.

That is, when the first core network device triggers the access network device to update the QoS configuration, the access network device further sends the fifth information to the first core network device, and feeds back, through the fifth information, that the QoS configuration on the side of the terminal device and/or the side of the access network device is successfully updated, so that the first core network device obtains an update status of the QoS configuration. Alternatively, when the terminal device triggers the access network device to update the QoS configuration, the access network device further sends the sixth information to the terminal device, and feeds back, through the sixth information, that the QoS configuration on the side of the first core network device and/or the side of the access network device is successfully updated, so that the first core network device obtains the update status of the QoS configuration.

In a possible design, when the access network device sends the second information to the terminal device, the second information is carried in a packet data convergence protocol PDCP layer of a first data packet, radio resource control RRC signaling, or a media access control control element MAC CE. The first data packet is a data packet sent by the access network device to the terminal device.

In a possible design, when the access network device sends the second information to the first core network device, the second information is carried in a general packet radio service rate protocol-user plane GTP-U layer of a second data packet. The second data packet is a data packet sent by the access network device to the first core network device.

For example, the second data packet may be a service data packet of the service.

For another example, the second data packet may alternatively be a null packet generated by the access network device.

In a possible design, when the first information is from the first core network device, the method further includes: The access network device sends seventh information to the first core network device. The seventh information indicates that the access network device fails to update the QoS configuration of the QoS flow. Alternatively, when the first information is from the terminal device, the method further includes: The access network device sends the seventh information to the terminal device. The seventh information indicates that the access network device fails to update the QoS configuration of the QoS flow.

For example, the access network device determines that a current network resource cannot support the target QoS configuration indicated by the first information, or the access network device determines that the target QoS configuration indicated by the first information is not within a pre-authorized range of a core network, for example, the target QoS configuration is not within the multiple QoS configurations provided by the second core network device, or a QoS parameter of the target QoS configuration is not within the QoS parameter adjustment range provided by the second core network device.

That is, when the first core network device triggers the access network device to update the QoS configuration, the access network device further sends the seventh information to the first core network device, and feeds back, through the seventh information, that the QoS configuration on the side of the access network device fails to be updated, so that the first core network device obtains an update status of the QoS configuration. Alternatively, when the terminal device triggers the access network device to update the QoS configuration, the access network device further sends the seventh information to the terminal device, and feeds back, through the seventh information, that the QoS configuration on the side of the access network device fails to be updated, so that the terminal device obtains the update status of the QoS configuration.

In a possible design, when the access network device sends the seventh information to the first core network device, the method further includes: The access network device sends eighth information to the first core network device. The eighth information indicates a QoS configuration supported by the access network device, and the QoS configuration indicated by the eighth information is used by the first core network device to update the QoS configuration of the QoS flow. Alternatively, when the access network device sends the seventh information to the terminal device, the method further includes: The access network device sends the eighth information to the terminal device. The eighth information indicates the QoS configuration supported by the access network device, and the QoS configuration indicated by the eighth information is used by the terminal device to update the QoS configuration of the QoS flow.

For example, the access network device determines the eighth information based on a current network resource status and/or the multiple QoS configurations (or the multiple QoS parameter adjustment ranges) that are provided by the second core network device for the QoS flow. For example, the delay in the target QoS configuration indicated by the first information needs to be 5 ms, but a transmission delay that can be supported by the current network resource is only 10 ms. In this case, the access network device generates the eighth information, and the delay included in the QoS configuration indicated by the eighth information needs to be 10 ms.

That is, when the QoS configuration on the side of the access network device fails to be updated, the access network device further sends the eighth information to the terminal device or the first core network device, to indicate the QoS configuration supported by the access network device, so that the terminal device or the first core network device updates the QoS configuration based on the eighth information, to assist the terminal device or the first core network device in updating the QoS configuration.

In a possible design, the method further includes: The access network device obtains time information. The time information indicates a time period in which the target QoS configuration is valid. To be specific, the target QoS configuration has time validity, and is valid in only a specific time period (some time periods).

In a possible design, after the access network device obtains the time information, the method further includes: The access network device performs QoS configuration restoration beyond the valid time period indicated by the time information. The QoS configuration restoration refers to restoring the QoS configuration of the QoS flow to an original QoS configuration.

For example, the time information is 10s. The access network device determines that the QoS configuration is updated, for example, from a QoS configuration 1 to the target QoS configuration, and after 10s of the update, the access network device performs the QoS configuration restoration, to restore the target QoS configuration to the QoS configuration 1.

For another example, the time information is a time period from 10:00 to 11:00. After 11:00, the access network device performs the QoS configuration restoration.

In a possible design, the method further includes: When the access network device determines that the service feature of the service is updated, the access network device sends the time information to the terminal device and/or the first core network device, so that the terminal device and/or the first core network device update/updates or restore/restores the QoS configuration of the QoS flow based on the time information.

In a possible design, the method further includes: When the first information is from the terminal device, the access network device sends the time information to the first core network device, so that the first core network device updates or restores the QoS configuration of the QoS flow based on the time information.

In a possible design, when the first information is from the first core network device, the access network device sends the time information to the terminal device, so that the terminal device updates or restores the QoS configuration of the QoS flow based on the time information.

In a possible design, that the access network device obtains the time information includes: The access network device determines the time information; or the access network device receives the time information from a second core network device; or the access network device receives the time information from the terminal device; or the access network device receives the time information from the first core network device.

In a possible design, that the access network device determines, in the service transmission process, that the service feature of the service is updated includes: The access network device determines, when a trigger condition is met, that the service feature of the service is updated.

The trigger condition includes at least one of the following conditions:

First, a difference between a first data volume and a second data volume is greater than a threshold. The first data volume is a data volume of the service transmitted in a first time unit, and the second data volume is a data volume of the service transmitted in a second time unit. That is, when a data volume of the service transmitted by the access network device changes and the change exceeds the threshold, the access network device determines that the service feature of the service is updated.

Second, the QoS configuration of the QoS flow expires. That is, when the QoS configuration of the QoS flow expires, the access network device determines that the service feature of the service is updated.

In a possible design, that the access network device updates the QoS configuration of the QoS flow includes: The access network device performs a resource adjustment. An adjusted resource is used for transmission of the service whose service feature is updated.

That is, the access network device performs a resource scheduling adjustment, so that the adjusted resource adapts to the update of the service feature, to ensure transmission efficiency of the service, and improve resource scheduling flexibility and resource utilization.

According to a second aspect, a communication method is provided. An execution body of the method may be a first communication device, or may be a part (for example, a processor, a chip, or a chip system) used in the first communication device, or may be a logical module or software that can implement a part or all of functions of the first communication device. An example in which the execution body is the first communication device is used below for description. The method includes: The first communication device determines, in a process of performing transmission of a service over a quality of service QoS flow, that a service feature of the service is updated. The first communication device is a terminal device or a first core network device. The first communication device sends first information to an access network device based on an updated service feature. The first information is used to determine a target QoS configuration of the QoS flow.

To be specific, in the service transmission process, when the first communication device determines that the service feature of the service is updated, the first communication device sends the first information to the access network device, so that the access network device updates a QoS configuration of the QoS flow based on the first information, to dynamically adjust the QoS configuration. This simplifies an update process of the QoS configuration, and effectively ensures a dynamically changing service requirement.

In a possible design, that the first communication device sends the first information to the access network device based on the updated service feature includes: The first communication device determines the target QoS configuration of the QoS flow based on the updated service feature. The first communication device sends the first information based on the target QoS configuration of the QoS flow. The first information indicates the target QoS configuration of the QoS flow.

That is, the first information is determined based on the updated service feature. In this way, the first communication device provides the first information for the access network device, to trigger the access network device to directly perform a fast QoS configuration update based on the first information, to meet the dynamically changing service requirement.

In a possible design, the method further includes: The first communication device determines the target QoS configuration based on the updated service feature. The first communication device determines the first information based on the target QoS configuration.

That is, the target QoS configuration is determined based on the updated service feature. In this way, the first communication device indicates the target QoS configuration to the access network device through the first information, and triggers the access network device to perform the fast QoS configuration update based on the first information, so that an updated QoS configuration can meet the dynamically changing service requirement.

In a possible design, the method further includes: The first communication device determines the target QoS configuration based on the updated service feature.

That is, the target QoS configuration is determined based on the updated service feature. In this way, when the first communication device indicates the target QoS configuration to the access network device, the access network device is triggered to perform the fast QoS configuration update based on the target QoS configuration, to meet the dynamically changing service requirement.

In a possible design, that the first communication device determines the target QoS configuration includes: The first communication device determines a QoS parameter that needs to be updated in a QoS configuration of the QoS flow.

That is, the first communication device determines the target QoS configuration by determining the QoS parameter that needs to be updated, to meet the dynamically changing service requirement.

In a possible design, the method further includes: The first communication device receives multiple QoS configurations for the QoS flow from a second core network device. That the first communication device determines the target QoS configuration includes: The first communication device determines the target QoS configuration in the multiple QoS configurations.

That is, the first communication device determines the target QoS configuration in the multiple QoS configurations provided by the second core network device for the QoS flow, to simplify a processing process on a side of the first communication device.

It may be understood as that the first communication device receives multiple pre-authorized QoS configurations for the QoS flow from the second core network device, and when the service feature of the service is updated, the first communication device determines the target QoS configuration in the multiple QoS configurations. In addition, if none of the multiple QoS configurations can meet the updated service feature or a QoS requirement corresponding to the first information, the first communication device rejects to trigger the update of the QoS configuration.

In a possible design, the method further includes: The first communication device receives one or more QoS parameter adjustment ranges for the QoS flow from the second core network device. That the first communication device determines the target QoS configuration of the QoS flow includes: The first communication device determines a target QoS parameter in the one or more QoS parameter adjustment ranges. The access network device determines the target QoS configuration based on the target QoS parameter.

That is, the first communication device obtains, from the second core network device, one or more pre-authorized QoS parameter adjustment ranges. In addition, the first communication device determines, based on the updated service feature, the QoS parameter that needs to be updated; determines the target QoS parameter within a QoS parameter adjustment range corresponding to the QoS parameter that needs to be updated; and determines the target QoS configuration based on the target QoS parameter. In addition, if none of QoS parameters within the one or more QoS parameter adjustment ranges can meet a QoS requirement corresponding to the updated service feature, the first communication device rejects to trigger the update of the QoS configuration.

In a possible design, the method further includes: When the first communication device is the first core network device, the first communication device receives fifth information from the access network device. The fifth information indicates that the terminal device and/or the access network device successfully update/updates the QoS configuration of the QoS flow. Alternatively, when the first communication device is the terminal device, the first communication device receives sixth information from the access network device. The sixth information indicates that the first core network device and/or the access network device successfully update/updates the QoS configuration of the QoS flow.

That is, when the first core network device triggers the access network device to update the QoS configuration, the access network device further sends the fifth information to the first core network device, and feeds back, through the fifth information, that the QoS configuration on a side of the terminal device and/or a side of the access network device is successfully updated, so that the first core network device learns an update status of the QoS configuration. Alternatively, when the terminal device triggers the access network device to update the QoS configuration, the access network device further sends the sixth information to the terminal device, and feeds back, through the sixth information, that the QoS configuration on the side of the first core network device and/or the side of the access network device is successfully updated, so that the terminal device learns the update status of the QoS configuration.

In a possible design, the method further includes: The first communication device updates the QoS configuration of the QoS flow based on the target QoS configuration, to update the QoS configuration.

In a possible design, when the first communication device is the first core network device, the method further includes: The first communication device receives the fifth information from the access network device. The fifth information indicates that the terminal device and/or the access network device successfully update/updates the QoS configuration of the QoS flow. That is, the terminal device and/or the access network device successfully update/updates the QoS configuration of the QoS flow to the target QoS configuration. The first communication device updates the QoS configuration of the QoS flow based on the target QoS configuration indicated by the fifth information, to update the QoS configuration.

In a possible design, when the first communication device is the terminal device, the method further includes: The first communication device receives the sixth information from the access network device. The sixth information indicates that the first core network device and/or the access network device successfully update/updates the QoS configuration of the QoS flow. That is, the first core network device and/or the access network device successfully update/updates the QoS configuration of the QoS flow to the target QoS configuration. The first communication device updates the QoS configuration of the QoS flow based on the target QoS configuration indicated by the sixth information, to update the QoS configuration.

In a possible design, the first communication device receives seventh information from the access network device. The seventh information indicates that the access network device fails to update the QoS configuration of the QoS flow, and the access network device updates the QoS configuration of the QoS flow based on the first information, so that the first communication device obtains an update status of the QoS configuration on the side of the access network device.

In a possible design, the method further includes: The first communication device receives eighth information from the access network device. The eighth information indicates a QoS configuration supported by the access network device.

That is, when the QoS configuration on the side of the access network device fails to be updated, the access network device further sends the eighth information to the first communication device, to indicate the QoS configuration supported by the access network device, so that the first communication device updates the QoS configuration based on the eighth information, to assist the first communication device in updating the QoS configuration.

In a possible design, the method further includes: The first communication device updates the QoS configuration of the QoS flow based on the QoS configuration indicated by the eighth information, to increase a probability of successfully updating the QoS configuration, and meet the dynamically changing service requirement as much as possible.

In a possible design, the first information is carried in a packet data convergence protocol PDCP layer or a general packet radio service rate protocol-user plane GTP-U layer of a first data packet, or radio resource control RRC signaling, or a media access control control element MAC CE. The first data packet is a data packet sent by the first communication device to the access network device.

In a possible design, the first communication device obtains time information. The time information indicates a time period in which the target QoS configuration is valid. To be specific, the target QoS configuration has time validity, and is valid in only a specific time period (some time periods).

In a possible design, after the first communication device obtains the time information, the method further includes: The first communication device performs QoS configuration restoration beyond the valid time period indicated by the time information. The QoS configuration restoration refers to restoring the QoS configuration of the QoS flow to an original QoS configuration.

For example, the time information is 10s. The first communication device determines that the QoS configuration is updated, for example, from a QoS configuration 1 to the target QoS configuration, and after 10s of the update, the first communication device performs the QoS configuration restoration, to update the target QoS configuration to the QoS configuration 1.

For another example, the time information is a time period from 10:00 to 11:00. After 11:00, the first communication device performs the QoS configuration restoration.

In a possible design, the method further includes: The first communication device sends the time information to the access network device, so that the access network device updates or restores the QoS configuration of the QoS flow based on the time information.

In a possible design, that the first communication device obtains the time information includes: The first communication device determines the time information, or the first communication device receives the time information from the second core network device.

In a possible design, that the first communication device determines, in the service transmission process, that the service feature of the service is updated includes:

The first communication device determines, when a trigger condition is met, that the service feature of the service is updated.

The trigger condition includes at least one of the following conditions:

First, a difference between a first data volume and a second data volume is greater than a threshold. The first data volume is a data volume of the service transmitted in a first time unit, and the second data volume is a data volume of the service transmitted in a second time unit. That is, when a data volume of the service transmitted by the first communication device changes and the change exceeds the threshold, the first communication device determines that the service feature of the service is updated.

Second, a notification message is obtained. The notification message indicates a network requirement of the service.

For example, when the first communication device is the terminal device, the terminal device receives notification information from an application layer, so that the first communication device learns that the service feature of the service is updated.

For another example, when the first communication device is the first core network device, the first core network device receives a notification message from an application server. For example, the first core network device receives a downlink data packet from the application server. The downlink data packet carries the notification message, and the notification message indicates that the network requirement of the service changes, or the notification message indicates a target network requirement of the service, so that the first communication device learns that the service feature of the service is updated.

Third, the QoS configuration of the QoS flow expires. That is, when the QoS configuration of the QoS flow expires, the first communication device determines that the service feature of the service is updated.

According to a third aspect, a communication method is provided. An execution body of the method may be a second communication device, or may be a part (for example, a processor, a chip, or a chip system) used in the second communication device, or may be a logical module or software that can implement a part or all of functions of the second communication device. An example in which the execution body is the second communication device is used below for description. The method includes: The second communication device receives second information from an access network device. The second information indicates a target quality of service QoS configuration of a QoS flow, the QoS flow is used for transmission of a service between a terminal device and a first core network device, and the second communication device is the terminal device or the first core network device. The second communication device updates a QoS configuration of the QoS flow to the target QoS configuration.

To be specific, in a process of the service transmission, the access network device indicates, through the second information, the second communication device to update the QoS configuration, so that the second communication device updates the QoS configuration based on the second information, to dynamically adjust the QoS configuration. This simplifies an update process of the QoS configuration, and effectively ensures a dynamically changing service requirement.

In a possible design, the method further includes: The second communication device sends third information to the access network device. The third information indicates that the second communication device successfully updates the QoS configuration of the QoS flow.

That is, when the access network device indicates, through the second information, the second communication device to update the QoS configuration, the access network device further receives the third information fed back by the second communication device, and learns, through the third information, that the QoS configuration on a side of the second communication device is successfully updated.

In a possible design, the method further includes: The second communication device obtains time information. The time information indicates a time period in which the target QoS configuration is valid. To be specific, the target QoS configuration has time validity, and is valid in only a specific time period (some time periods).

In a possible design, the method further includes: The second communication device restores the QoS configuration of the QoS flow based on the time information. That is, the second communication device restores the QoS configuration of the QoS flow based on the time information.

For example, the time information is 10s. The second communication device determines that the QoS configuration is updated, for example, from a QoS configuration 1 to the target QoS configuration, and after 10s of the update, the second communication device performs the QoS configuration restoration, to update the target QoS configuration to the QoS configuration 1.

For another example, the time information is a time period from 10:00 to 11:00. After 11:00, the second communication device performs the QoS configuration restoration.

In a possible design, the second information is carried in a packet data convergence protocol PDCP layer or a general packet radio service rate protocol-user plane GTP-U layer of a first data packet, or radio resource control RRC signaling, or a media access control control element MAC CE. The first data packet is a data packet received by the second communication device from the access network device.

According to a fourth aspect, a communication method is provided. An execution body of the method may be a third core network device, or may be a part (for example, a processor, a chip, or a chip system) used in the third core network device, or may be a logical module or software that can implement a part or all of functions of the third core network device. An example in which the execution body is the third core network device is used below for description. The method includes: The third core network device obtains quality of service QoS information. The QoS information includes a first QoS requirement and a second QoS requirement of a service. The third core network device determines a policy and charging control PCC rule based on the QoS information. The PCC rule indicates a QoS configuration, and when a first QoS parameter of the QoS configuration is a first value, the QoS configuration meets the first QoS requirement; or when the first QoS parameter of the QoS configuration is a second value, the QoS configuration meets the second QoS requirement. Alternatively, the PCC rule indicates multiple QoS configurations, a first QoS configuration in the multiple QoS configurations meets the first QoS requirement, and a second QoS configuration in the multiple QoS configurations meets the second QoS requirement.

That is, the third core network device can determine the QoS configuration based on different QoS requirements of the service in a running process, so that the QoS configuration meets the different QoS requirements of the service. This provides a basis for updating the QoS configuration in a transmission process of the service.

In a possible design, the QoS information further includes at least one of the following:

First is a validation condition. The validation condition includes a condition for the first QoS requirement to take effect and a condition for the second QoS requirement to take effect, so that the third core network device learns conditions for different QoS requirements of the service to take effect, to help the third core network device determine a time period in which the QoS configuration is valid.

Second is a trigger condition. The trigger condition is used to determine whether a service feature of the service is updated, to determine whether to trigger an update of the QoS configuration.

Third is device information. The device information indicates a communication device using the trigger condition, to indicate the communication device that triggers the update of the QoS configuration.

In a possible design, that the third core network device obtains the QoS information includes: The third core network device receives the QoS information from an application server AF.

That is, the third core network device obtains the QoS information from the application server.

In a possible design, the service is transmitted between a terminal device and a first core network device over a QoS flow. The PCC rule further includes at least one of the following:

First is first indication information. The first indication information indicates that the QoS configuration of the QoS flow is updatable, so that the terminal device, an access network device, or the first core network device dynamically adjusts the QoS configuration of the QoS flow.

Second is second indication information. The second indication information indicates the communication device to update the QoS configuration of the QoS flow, and the communication device is the terminal device, the first core network device, or the access network device. That is, the third core network device indicates the communication device that triggers the update of the QoS configuration.

Third is the validation condition. The validation condition includes the condition for the first QoS requirement to take effect and the condition for the second QoS requirement to take effect.

Fourth is the trigger condition. The trigger condition is used to determine whether the service feature of the service is updated.

Fifth is the device information. The device information indicates the communication device using the trigger condition.

In a possible design, the method further includes: The third core network device sends the PCC rule to a second core network device through a first process. The first process includes a protocol data unit PDU session establishment process or a PDU session modification process.

That is, the third core network device provides the PCC rule for the second core network device, so that the second core network device configures a parameter for the terminal device, the access network device, or the first core network device according to the PCC rule.

According to a fifth aspect, a communication apparatus is provided, configured to implement the foregoing methods. The communication apparatus includes a corresponding module, unit, or means (means) for implementing the method. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects or the possible implementations of the foregoing aspects. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and the possible implementations of the foregoing aspects.

According to a sixth aspect, a communication apparatus is provided, and includes a processor and a memory. The processor is coupled to the memory. The memory stores program instructions. When the program instructions stored in the memory are executed by the processor, the communication apparatus is caused to perform the method in any one of the foregoing aspects or the possible designs of the foregoing aspects.

According to a seventh aspect, a communication apparatus is provided, and includes a processor. The processor is configured to execute a computer program or instructions, to cause the communication apparatus to perform the method in any one of the foregoing aspects.

Optionally, the communication apparatus further includes a memory. The memory may be coupled to the processor, or the memory may be independent of the processor. For example, the memory and the processor are two independent modules. The memory may be located outside the communication apparatus, or may be located inside the communication apparatus.

According to an eighth aspect, a computer-readable storage medium is provided. The computer-readable storage medium stores a computer program or computer instructions. When the computer program or the computer instructions are run on a communication apparatus, the communication apparatus is caused to perform the method in any one of the foregoing aspects.

According to a ninth aspect, a computer program product including instructions is provided. When the computer program product runs on a communication apparatus, the communication apparatus is caused to perform the method in any one of the foregoing aspects.

The communication apparatus provided in any one of the fifth aspect to the ninth aspect may be the access network device in the first aspect, or the part in the access network device, for example, the chip or the chip system; or the communication apparatus may be the first communication device in the second aspect, or the part in the first communication device, for example, the chip or the chip system; or the communication apparatus may be the second communication device in the third aspect, or the part in the second communication device, for example, the chip or the chip system; or the communication apparatus may be the third core network device in the fourth aspect, or the part in the third core network device, for example, the chip or the chip system. When the apparatus is the chip system, the apparatus may include a chip, or may include a chip and another discrete component.

It may be understood that when the communication apparatus according to any one of the fifth aspect to the ninth aspect is the chip, a sending action/function of the communication apparatus may be understood as outputting information, and a receiving action/function of the communication apparatus may be understood as inputting information.

For technical effects brought by any design manner of the fifth aspect to the ninth aspect, refer to the technical effects brought by different design manners of the first aspect to the fourth aspect. Details are not described herein again.

### BRIEF DESCRIPTION OF DRAWINGS

FIG. 1 is a diagram of an architecture of a communication system to which an embodiment of this application is applied;
FIG. 2a is a diagram of an architecture of another communication system to which an embodiment of this application is applied;
FIG. 2b shows a user plane protocol according to an embodiment of this application;
FIG. 3 is a schematic flowchart of a multi-level QoS mechanism according to an embodiment of this application;
FIG. 4 is a principle diagram of a reflective QoS mechanism according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a schematic flowchart of still another communication method according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of still another communication apparatus according to an embodiment of this application.

### DESCRIPTION OF EMBODIMENTS

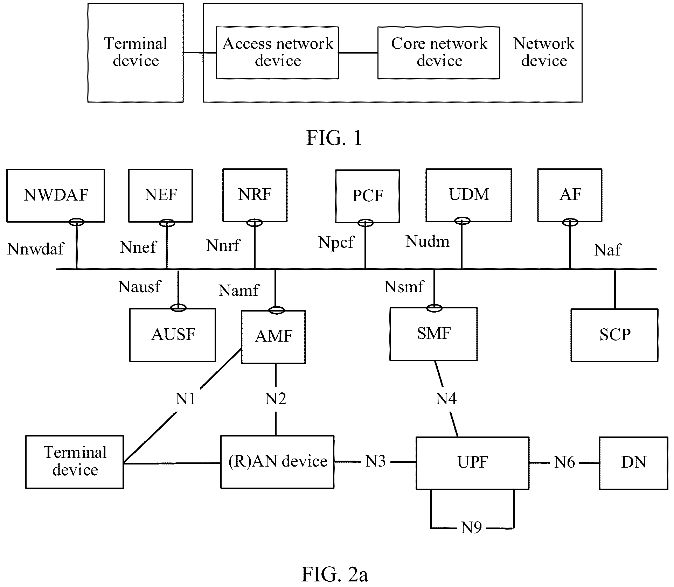

Embodiments of this application may be applied to a communication system shown in FIG. 1. The communication system may be a communication system that supports a 4th generation (fourth generation, 4G) access technology, for example, a long term evolution (long term evolution, LTE) access technology; or the communication system may be a communication system that supports a 5th generation (fifth generation, 5G) access technology, for example, a new radio (new radio, NR) access technology; or the communication system may be a communication system that supports multiple radio technologies, for example, a communication system that supports the LTE access technology and the NR access technology. In addition, the communication system is also applicable to a future-oriented communication technology.

FIG. 1 is a diagram of an architecture of a communication system according to an embodiment of this application. As shown in FIG. 1, the communication system includes a terminal device and a network device. The network device includes an access network (access network, AN) device and a core network (core network, CN) device. The access network device may alternatively be replaced with a radio access network (radio access network, RAN) device.

The terminal device accesses a core network via the access network device or the radio access network device. The terminal device includes a device that provides a voice and/or data connectivity for a user. Specifically, the terminal device includes a device that provides a voice for the user, or includes a device that provides data connectivity for the user, or includes a device that provides a voice and data connectivity for the user. For example, the terminal device may include a handheld device having a wireless connection function or a processing device connected to a wireless modem. The terminal device may communicate with the core network via a radio access network, exchange a voice or data with the RAN, or exchange a voice and data with the core network. The terminal device may include user equipment (user equipment, UE), a wireless terminal device, a mobile terminal device, a device-to-device (device-to-device, D2D) communication terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or computer built-in mobile apparatus. For example, the terminal device may be a device like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner.

If the various terminal devices described above are located in a vehicle (for example, placed inside the vehicle or mounted inside the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood as that any device that can perform data communication with a base station may be considered as a terminal device.

In embodiments of this application, an apparatus configured to implement a function of the terminal device may be a terminal device, or may be an apparatus that can support the terminal device in implementing the function, for example, a chip system. The apparatus may be mounted in the terminal device. In embodiments of this application, the chip system may include a chip, or may include a chip and another discrete component. In technical solutions provided in embodiments of this application, an example in which the apparatus configured to implement the function of the terminal device is a terminal device is used for description.

The access network device may be a device that connects a terminal device to a wireless network. The access network device in embodiments of this application may include various forms of base stations (base station), for example, may be a macro base station, a micro base station (also referred to as a small cell), a relay station, an access point, a transmission point (transmission point, TP), an evolved base station (evolved NodeB, eNodeB), a transmission reception point (transmission reception point, TRP), a next generation base station (next generation NodeB, gNB) in a 5G communication system, a device that implements a base station function in a communication system evolved after 5G, a mobile switching center, and a device that undertakes the base station function in D2D, V2X, or M2M communication; or may be an access network device in a non-terrestrial network (non-terrestrial network, NTN) communication system, that is, may be deployed on a high-altitude platform or a satellite; or may be a module or unit that completes a part of functions of the base station, for example, may be a central unit (central unit, CU) in a cloud access network (cloud radio access network, C-RAN) system, or may be a distributed unit (distributed unit, DU). A specific technology and a specific device form that are used by the access network device are not limited in embodiments of this application. All or a part of functions of the radio access network device may alternatively be implemented through a software function running on hardware, or implemented through a virtualized function instantiated on a platform (for example, a cloud platform). In embodiments of this application, unless otherwise specified, the access network device is a RAN device.

Different core network devices of the core network are described as follows.

A user plane network element is configured for packet routing and forwarding, handling of quality of service (quality of service, QoS) of user plane data, and the like. As shown in FIG. 2a, in a 5G communication system, the user plane network element may be a user plane function (user plane function, UPF) network element. In a future communication system, the user plane network element may still be the UPF network element, or may have another name. This is not limited in embodiments of this application.

A data network (data network, DN) network element is configured to provide a network for data transmission. As shown in FIG. 2a, in the 5G communication system, the data network may be a DN. In the future communication system, the data network may still be the DN, or may have another name. This is not limited in embodiments of this application.

An authentication service network element is configured to: perform an authentication service, generate a key to implement two-way authentication for a terminal device, and support a unified authentication framework. As shown in FIG. 2a, in the 5G communication system, the authentication service network element may be an authentication server function (authentication server function, AUSF) network element. In the future communication system, the authentication server function network element may still be the AUSF network element, or may have another name. This is not limited in embodiments of this application.

An access and mobility management network element is configured for mobility management, access management, and the like, and may be configured to implement functions, for example, functions such as lawful intercept and access authorization/authentication, other than session management in functions of a mobility management network element (mobility management entity, MME). As shown in FIG. 2a, in the 5G communication system, the access and mobility management network element may be an access and mobility management function (access and mobility management function, AMF) network element. In the future communication system, the access and mobility management network element may still be the AMF network element, or may have another name. This is not limited in embodiments of this application.

A session management network element is mainly configured for session management, internet protocol (internet protocol, IP) address assignment and management of a terminal device, selection and control of a user plane function, termination of interfaces toward policy control and charging functions, downlink data notification, and the like. As shown in FIG. 2a, in the 5G communication system, the session management network element may be a session management function (session management function, SMF) network element. In the future communication system, the session management network element may still be the SMF network element, or may have another name. This is not limited in embodiments of this application.

A service communication function network element is configured to provide a selection communication function between network function (network function, NF) network elements. As shown in FIG. 2a, in the 5G communication system, the service communication function network element may be a service communication function (service communication function, SCP) network element. In the future communication system, the service communication function network element may still be the SCP network element, or may have another name. This is not limited in embodiments of this application.

A network data analysis function network element is configured to provide a network data analysis function, and provides a network data collection and analysis service based on technologies such as big data and artificial intelligence. As shown in FIG. 2a, in the 5G communication system, the network data analysis function network element may be a network data analytics function (network data analytics function, NWDAF) network element. In the future communication system, the network data analysis function network element may still be the NWDAF network element, or may have another name, for example, a network analysis network element or a network analysis function network element. This is not limited in embodiments of this application.

A network capability exposure function network element is configured to provide a network customization function. As shown in FIG. 2a, in the 5G communication system, the network capability exposure function network element may be a network capability exposure function (network exposure function, NEF) network element. In the future communication system, the network capability exposure function network element may still be the NEF network element, or may have another name. This is not limited in embodiments of this application.

A network repository network element is configured to maintain real-time information of all network function services in a network. As shown in FIG. 2a, in the 5G communication system, the network repository network element may be a network registration function (network repository function, NRF) network element. In the future communication system, the network repository network element may still be the NRF network element, or may have another name. This is not limited in embodiments of this application.

A policy control network element is configured to: provide a unified policy framework to govern network behavior, provide policy rule information for a control plane network element (for example, an AMF network element or an SMF network element), and the like. In a 4G communication system, the policy control network element may be a policy and charging rules function (policy and charging rules function, PCRF) network element. As shown in FIG. 2a, in the 5G communication system, the policy control network element may be a policy control function (policy control function, PCF) network element. In the future communication system, the policy control network element may still be the PCF network element, or may have another name. This is not limited in embodiments of this application.

A data management network element is configured for terminal device identifier handling, access authentication, registration, mobility management, and the like. As shown in FIG. 2a, in the 5G communication system, the data management network element may be a unified data management (unified data management, UDM) network element. In the future communication system, the data management network element may still be the UDM network element, or may have another name. This is not limited in embodiments of this application.

An application network element is configured to: perform application influence on data routing, access a network exposure function network element, interact with a policy framework for policy control, and the like. As shown in FIG. 2a, in the 5G communication system, the application network element may be an application function (application function, AF) network element. In the future communication system, the application network element may still be the AF network element, or may have another name, for example, an application server (application server, AS), a service server, or a third-party server. This is not limited in embodiments of this application. In embodiments of this application, the application server is used as an example for description.

Refer to FIG. 2a. A terminal device accesses a 5G network via a (R)AN device, and the terminal device communicates with an AMF network element through an N1 interface (N1 for short). The (R)AN device communicates with the AMF network element through an N2 interface (N2 for short). The (R)AN device communicates with a UPF network element through an N3 interface (N3 for short). An SMF network element communicates with the UPF network element through an N4 interface (N4 for short). The UPF network element accesses a DN through an N6 interface (N6 for short). Different UPF network elements communicate with each other through an N9 interface (N9 for short). In the architecture shown in FIG. 2a, N1, N2, N3, N4, N6, and N9 respectively represent reference points (reference points) between related network elements/network functions. The (R)AN device is an AN device or a RAN device.

In addition, control plane functions such as an AUSF network element, the AMF network element, the SMF network element, an NWDAF network element, an NEF network element, an NRF network element, a PCF network element, a UDM network element, or an AF network element shown in FIG. 2a may interact with each other through a service-based interface. For example, a service-based interface exhibited by the AUSF network element is Nausf; a service-based interface exhibited by the AMF network element is Namf; a service-based interface exhibited by the SMF network element is Nsmf; a service-based interface exhibited by the NWDAF network element is Nnwdaf; a service-based interface exhibited by the NEF network element is Nnef; a service-based interface exhibited by the NRF network element is Nnrf; a service-based interface exhibited by the PCF network element is Npcf; a service-based interface exhibited by the UDM network element is Nudm; and a service-based interface exhibited by the AF network element is Naf. For related function descriptions and interface descriptions, refer to a diagram of a 5G system architecture (5G system architecture) in the 23501 standard. Details are not described herein.

Optionally, the foregoing core network devices may be implemented by one device, may be jointly implemented by multiple devices, or may be one functional module in one device. This is not specifically limited in embodiments of this application. It may be understood that the foregoing functional module may be a network element in a hardware device, or may be a software functional module running on dedicated hardware, or may be a virtualized functional module instantiated on a platform (for example, a cloud platform).

Optionally, in embodiments of this application, the term "network element" may be replaced with "entity", "device", or the like. For example, the "AMF network element" may alternatively be written as an "AMF entity" or an "AMF device", and the "SMF network element" may alternatively be written as an "SMF entity" or an "SMF device." In addition, in some embodiments, for ease of description, an "XXX network element" is written as "XXX" for short. For example, the "AUSF network element" may alternatively be written as "AUSF" for short, and the "SMF network element" may alternatively be written as "SMF" for short. In embodiments of this application, the XXX network element is used as an example for description. Unified descriptions are provided herein, and details are not described below again.

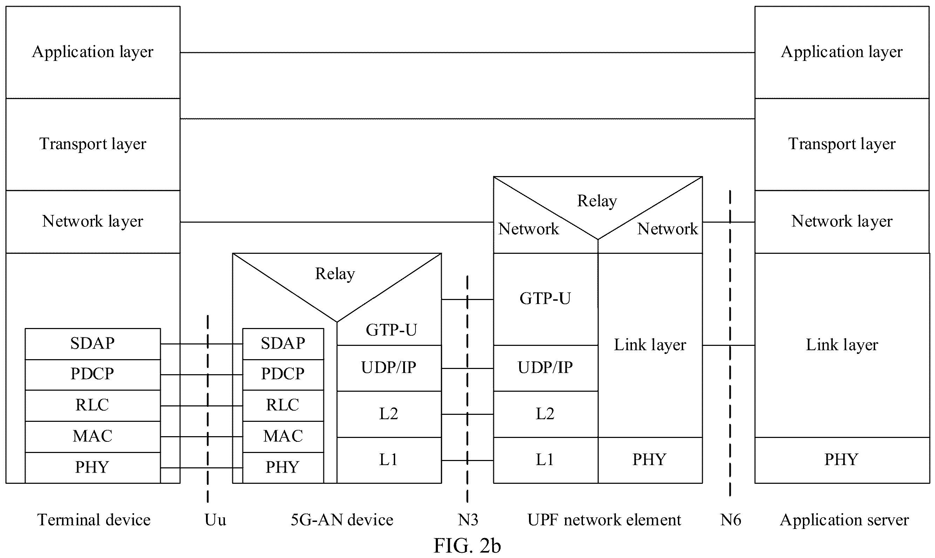

FIG. 2b shows a user plane protocol model from a terminal device to an application server.

The protocol model includes an application layer (application layer), a transport layer (transport layer), a network layer (network layer), a link layer (link layer), and a physical layer (physical layer) from top to bottom.

In FIG. 2b, a connection used to send and receive data is located at the transport layer, and the transport layer is an end-to-end protocol layer from the terminal device to the application server. A related protocol of the transport layer includes a quick user datagram protocol internet connection (quick user datagram protocol internet connection, QUIC) protocol and a user datagram protocol (user datagram protocol, UDP), or the related protocol of the transport layer includes the UDP protocol, or the related protocol of the transport layer includes a transmission control protocol (transmission control protocol, TCP).

It is easy to understand that in some protocol division models, through division, the QUIC protocol is an application layer protocol rather than a transport layer protocol.

Below the network layer, there are several segments of different 3GPP internet protocol stacks from the terminal device to an access network device and from the access network device to a user plane network element that are interconnected. Specifically, a 3GPP internet protocol stack between the terminal device and an access device includes a service data adaptation protocol (service data adaptation protocol, SDAP) layer, a packet data convergence protocol (packet data convergence protocol, PDCP) layer, and lower protocol layers. The lower protocol layers include a radio link control (radio link control, RLC) layer, a media access control (media access control, MAC) layer, and a physical (physical, PHY) layer. A 3GPP network protocol stack between the access network device and the user plane network element includes a general packet radio service technology (general packet radio service, GPRS) tunneling protocol-user plane (GPRS tunneling protocol for the user plane, GTP-U) layer and lower protocol layers. The lower protocol layers include a user datagram protocol (user datagram protocol, UDP) layer/internet protocol (internet protocol, IP) layer, a layer 2 (level 2, L2), and a layer 1 (level 1, L1). The access network device and the user plane network element belong to a 3GPP network.

The GTP-U layer includes a GTP-U tunnel. The GTP-U tunnel is a connection tunnel between the access network device and the user plane network element (for example, a 5G-AN device and a UPF network element in FIG. 2b). To be specific, data from/to a side of the terminal device is added to the GTP-U tunnel for sending. The GTP-U tunnel is at a PDU session granularity. To be specific, a GTP-U tunnel between the access network device and the user plane network element is established for each PDU session.

A network protocol stack between the terminal device and the user plane network element includes a network layer. A network protocol stack between the user plane network element and the application server includes a network layer, a link layer (link layer), and a physical layer.

For ease of understanding embodiments of this application, the following first briefly describes related technologies or terms in embodiments of this application. It should be understood that these descriptions are merely for ease of understanding of embodiments of this application, and shall not constitute any limitation on this application.

### 1. QoS flow (QoS Flow)

In a communication system, when a terminal device has a service communication requirement, a protocol data unit (protocol data unit, PDU) session (session) is established. One PDU session may include one or more QoS flows, and each QoS flow is used to carry a service flow. The QoS flow may be pre-configured, or may be established through a PDU session establishment procedure, or may be established through a PDU session modification procedure. One QoS flow identifier (QoS flow identifier, QFI) identifies one QoS flow. User plane data with a same QFI in the PDU session is forwarded and processed in a same manner (for example, using same scheduling or a same admission threshold).

In the communication system, the QoS flow may be controlled by an SMF network element.

For example, the SMF network element may send a QoS rule (for example, a QoS rule) of the QoS flow to the terminal device. The QoS rule includes a QFI, a packet filter set (packet filter set), a QoS rule identifier (QoS rule ID), and the like. The terminal device may classify and mark an uplink service flow according to the QoS rule, that is, the terminal device may associate uplink data with a corresponding QoS flow according to the QoS rule.

For another example, the SMF network element may send a QoS profile (for example, a QoS profile) of the QoS flow to an access network device. The QoS profile may include a 5G QoS identifier (5G QoS identifier, 5QI), an allocation and retention priority (allocation and retention priority, ARP), a guaranteed flow bit rate (guaranteed flow bit rate, GFBR), a maximum flow bit rate (maximum flow bit rate, MFBR), a QFI, and the like. One QoS profile corresponds to one QFI. The access network device may control a service flow based on the QoS profile.

It should be noted that, in embodiments of this application, the QoS profile may alternatively have other names, such as a QoS profile, a QoS document, a QoS record, a QoS file, a QoS configuration, a QoS configuration file, and a QoS configuration document. In embodiments of this application, the QoS profile is used as an example for description, and should not be construed as a limitation on embodiments of this application. In embodiments of this application, the QoS profile may be the QoS profile. For the QoS profile, refer to a related 3GPP technical specification. Details are not described.

For still another example, the SMF network element may send an N4 rule (for example, an N4 rule) of the QoS flow to a user plane network element. The N4 rule includes a data packet detection rule, a usage reporting rule, a QoS execution rule, and the like. The QoS execution rule includes a maximum bit rate, a guaranteed bit rate (guaranteed bit rate, GBR), an average window, and the like.

QoS flows may be classified into the following types: a guaranteed bit rate (guaranteed bit rate, GBR) QoS flow, a delay-critical GBR (delay-critical GBR) QoS flow, and a non-guaranteed bit rate (Non-GBR) QoS flow.

It should be noted that, in embodiments of this application, the following descriptions have a same meaning, and may be replaced with each other: a QoS flow configuration and a QoS configuration. Unified descriptions are provided herein. Details are not described below again.

### 2. Video surveillance scenario

In the video surveillance scenario, a video collection end usually has a specific local processing capability. When no target event is detected, the video collection end only continuously collects and stores videos, and periodically notifies a remote server that everything is normal currently. However, when the target event is triggered, for example, an interesting event occurs, the video collection end sends a high-definition video back to a side of the remote server. In this case, burst heavy uplink traffic is generated, that is, a large volume of uplink data needs to be transmitted.

### 3. Cloud extended reality (extended reality, XR), cloud gaming, and cloud photographing scenarios

In real-time media service scenarios, such as augmented reality (augmented reality, AR), virtual reality (virtual reality, VR), mixed reality (mix reality, MR), cloud gaming, and cloud photographing services that are currently emerging, there is an extremely strict requirement on an end-to-end delay. In addition, under impact of factors such as adaptive frame rate adjustment or user behavior triggering, transmission traffic has randomness, and a volume of randomly transmitted data cannot be predicted in advance.

For example, for a service like cloud gaming, a media frame is sent from a cloud server to a side of a terminal device. Due to differences between game content and user behavior, sizes of different media frames are irregular, and a network side cannot predict a size of a downlink media frame.

For another example, for a cloud photographing service, after a user taps a photographing button, the terminal device sends uncompressed original picture data to a side of a cloud server, and the cloud server performs noise reduction, sharpening, compression, and encoding on the original picture data, and sends processed picture data back to the terminal device in a timely manner. The terminal device presents the processed picture data. In this case, burst heavy uplink traffic caused by the user behavior is a main traffic feature of the service.

### 4. Multi-level QoS mechanism

The multi-level QoS mechanism is defined in a 3GPP protocol. The multi-level QoS mechanism may support V2X communication.

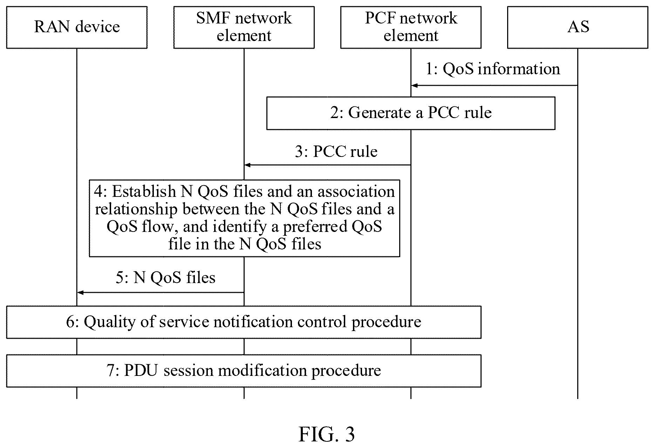

As shown in FIG. 3, the multi-level QoS mechanism includes the following operations.

Step 1: An AS sends QoS information to a PCF network element. Correspondingly, the PCF network element receives the QoS information from the AS.

The AS may be an application server for V2X communication, for example, denoted as a V2X AS.

The QoS information includes QoS requirement information of N levels of a same QoS flow, and N is a positive integer greater than or equal to 2. The QoS requirement information includes but is not limited to a packet delay budget (packet delay budget, PDB), a packet error rate (packet error rate, PER), and the like.

Step 2: The PCF network element generates a policy and charging control (policy and charging control, PCC) rule based on the QoS information.

The PCC rule includes N QoS parameter sets, and each QoS parameter set indicates a QoS configuration. The N QoS parameter sets are obtained by mapping the QoS information. For example, the N QoS parameter sets are in one-to-one correspondence with the N levels of QoS requirement information.

For example, the PCF network element identifies a preferred QoS parameter set in the N QoS parameter sets. The preferred QoS parameter set may be understood as a parameter set that is preferentially applied to the QoS flow in the N QoS parameter sets.

Step 3: The PCF network element sends the PCC rule to an SMF network element. Correspondingly, the SMF network element receives the PCC rule from the PCF network element.

The PCC rule in step 3 is consistent with the PCC rule in step 2. Details are not described again.

Step 4: The SMF network element establishes N QoS files and an association relationship between the N QoS files and the QoS flow according to the PCC rule, and identifies a preferred QoS file in the N QoS files.

The N QoS files are in one-to-one correspondence with the N QoS parameter sets. The preferred QoS file may be understood as a QoS file that is preferentially applied to the QoS flow in the N QoS files.

Step 5: The SMF network element sends the N QoS files to a RAN device. Correspondingly, the RAN device receives the N QoS files from the SMF network element.

The RAN device may include a next generation radio access network (next generation radio access network, NG-RAN) device, for example, denoted as an NG-RAN device.

The N QoS files in step 5 are consistent with the N QoS files in step 4. Details are not described again.

For the RAN device, after receiving the N QoS files, when detecting that a QoS configuration of the QoS flow cannot meet the preferred QoS file, the RAN device determines the N QoS files based on the association relationship between the QoS flow and the N QoS files. For the N QoS files, the RAN device determines, in QoS files other than the preferred QoS file, a QoS file supported by the RAN device. In addition, the RAN device performs step 6.

Step 6: The RAN device notifies the PCF network element through a quality of service notification control (QoS notification control) procedure.

For example, in the QoS notification control procedure, the RAN device sends a notification message to the PCF network element. Correspondingly, the PCF network element receives the notification message from the RAN device. The notification message indicates that the QoS configuration of the QoS flow cannot meet the preferred QoS file. Optionally, the notification message further indicates the QoS file currently supported by the RAN device.

It should be understood that the QoS file indicated by the notification message is a QoS file other than the preferred QoS file in the N QoS files.

Step 7: The PCF network element initiates a PDU session modification procedure, and adjusts the QoS configuration through the PDU session modification procedure.

That is, the QoS configuration adjustment is triggered through the QoS notification control procedure, and is implemented through the PDU session modification procedure. In the multi-level QoS mechanism, the RAN device may trigger the QoS configuration adjustment through the QoS notification control procedure, and may further feed back the QoS file supported by the RAN device to the PCF network element, but cannot adjust the QoS configuration. The RAN device can trigger, only after notifying a side of a core network device, the PDU session modification procedure to implement the QoS configuration adjustment. Consequently, signaling overheads are high, and a dynamically changing QoS requirement cannot be met.

In addition, the multi-level QoS mechanism is applicable to a GBR QoS flow, and an application scope is limited.

### 5. Reflective QoS (Reflective QoS) mechanism

The reflective QoS mechanism is introduced to reduce signaling overheads for delivering a QoS rule on a network side. The reflective QoS mechanism means that a QoS configuration used for uplink data is the same as a QoS configuration used for downlink data.

Specifically, a UPF network element sends a downlink data packet to a RAN device. Correspondingly, the RAN device receives the downlink data packet from the UPF network element. A GTP-U extension header of the downlink data packet includes a reflective quality of service identifier (reflective QoS indication, RQI). The RQI indicates to activate a reflective quality of service mechanism at a QoS flow granularity. The RAN device sends the downlink data packet to a terminal device. Correspondingly, the terminal device receives the downlink data packet from the RAN device. The downlink data packet includes the RQI and a QFI. The QFI identifies a QoS flow. The terminal device updates a QoS rule based on the RQI and the QFI, and generates a derived or derivative QoS rule (derived QoS rule). The derived QoS rule includes an uplink packet filter (uplink packet filter, UL packet filter), the QFI, a precedence value (precedence value), and the like.

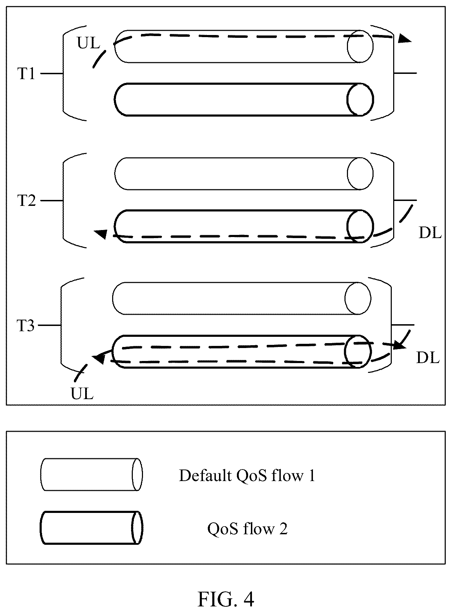

FIG. 4 is used as an example. QoS flows between a terminal device and a user plane network element include a default QoS flow 1 (Default QoS Flow1) and a QoS flow 2 (QoS Flow2).

As shown in FIG. 4, at a moment T1, the terminal device initiates a service, but no UL packet filter is matched. In this case, an uplink packet (uplink packet, UL packet) is sent to the user plane network element over the default QoS flow 1, as shown by a dashed curve marked with UL at the moment T1.

As shown in FIG. 4, at a moment T2, the user plane network element initiates a QoS flow signaling plane establishment procedure, to implement downlink flow mapping. The QoS flow signaling plane establishment procedure is performed over the QoS flow 2, as shown by a dashed curve marked with DL at the moment T2.

As shown in FIG. 4, at a moment T3, the terminal device maps an uplink flow to the QoS flow 2 based on the QoS flow signaling plane establishment procedure, that is, sends the UL packet to the user plane network element over the QoS flow 2, as shown by a dashed curve marked with UL at the moment T3.

Optionally, in the reflective QoS mechanism, a feedback QoS timer (Reflective QoS timer) is further configured. After running of the reflective QoS timer expires, the terminal device deletes the derived QoS rule. The reflective QoS timer may be pre-configured by a communication system for the terminal device. Alternatively, the reflective QoS timer may be configured by the SMF network element for the terminal device. Alternatively, the reflective QoS timer may be configured by the PCF network element for the terminal device.

That is, in the reflective QoS mechanism, the terminal device can modify only the UL packet filter on a side of the terminal device, and cannot adjust the QoS configuration.

It should be noted that, in embodiments of this application, the following descriptions have a same meaning and may be replaced with each other: QoS configuration update, QoS configuration adjustment, updating the QoS configuration, and adjusting the QoS configuration. Unified descriptions are provided herein. Details are not described below again.

It can be learned from the foregoing descriptions that, to meet the dynamically changing service requirement, the QoS configuration needs to be continuously adjusted. In the multi-level QoS mechanism, although the QoS configuration can be adjusted through the QoS notification control procedure and the PDU session modification procedure, signaling overheads are high, and the dynamically changing service requirement cannot be met. In the reflective QoS mechanism, the terminal device can update the UL packet filter, but still cannot adjust the QoS configuration.

In conclusion, how to simplify a QoS configuration update process to meet the dynamically changing service requirement is a technical problem to be urgently resolved.

In view of this, an embodiment of this application provides a first communication method. The communication method may be applied to the communication system shown in FIG. 1 or FIG. 2a. In the communication method provided in this embodiment of this application, an access network device determines, in a process of performing transmission of a service, that a service feature of the service is updated; or the access network device receives first information from a terminal device or a first core network device in the service transmission process. The service transmission process is performed over a QoS flow. The first information is used to determine a target QoS configuration of the QoS flow. The access network device updates a QoS configuration of the QoS flow.

To be specific, in the service transmission process, when the access network device determines that the service feature of the service is updated or receives the first information, the access network device updates the QoS configuration of the QoS flow, to dynamically adjust the QoS configuration. Compared with the multi-level QoS mechanism in which the access network device is configured to trigger a QoS configuration update and a QoS configuration can be adjusted only through the QoS notification control procedure and the PDU session modification procedure, in this application, the access network device can independently update the QoS configuration, to simplify a QoS configuration update process.

It should be understood that names of messages between devices, names of parameters in the messages, or the like in the following embodiments of this application are merely examples, and there may be other names during specific implementation. This is not specifically limited in embodiments of this application. Unified descriptions are provided herein. Details are not described below again.

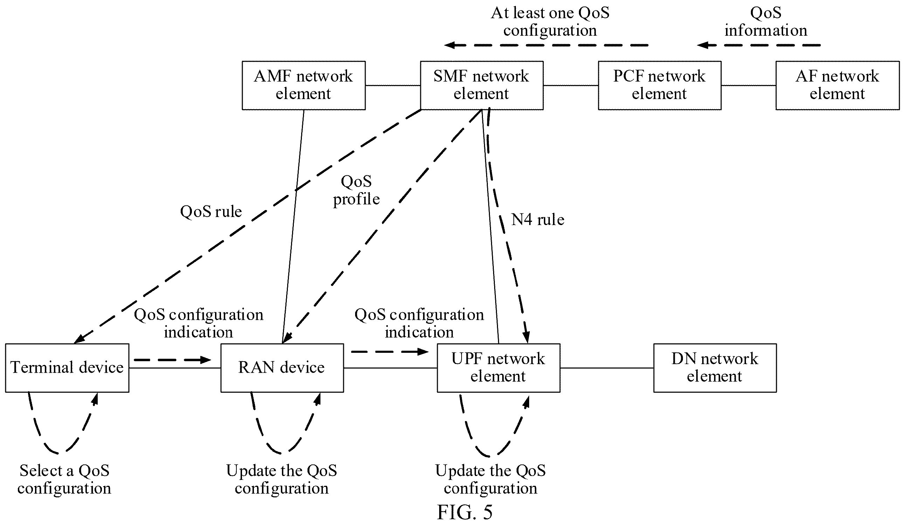

With reference to FIG. 5 to FIG. 13, the following describes in detail communication methods provided in embodiments of this application. The communication method in embodiment of this application includes two phases: a phase 1 and a phase 2.

The phase 1 may be understood as a QoS parameter set configuration process. For example, a QoS parameter set in the phase 1 indicates at least one QoS configuration for a QoS flow.

As shown in FIG. 5, in the phase 1, an AF network element provides QoS information, for example, a QoS requirement of a service, for a PCF network element. The PCF network element generates a PCC rule based on the QoS requirement of the service, and sends the PCC rule to an SMF network element. The PCC rule indicates the at least one QoS configuration. The SMF network element performs at least one of the following according to the PCC rule: sending a QoS rule to a terminal device, or sending a QoS profile to a RAN device, or sending an N4 rule to a UPF network element. The PCC rule, the QoS rule, the QoS profile, and the N4 rule may include a QoS parameter set. The at least one QoS configuration for the QoS flow is indicated through the QoS parameter set.

The phase 2 may be understood as a QoS configuration update process of the QoS flow. For example, in the phase 2, an updated QoS configuration is included in the at least one QoS configuration.

As shown in FIG. 5, in the phase 2, that the terminal device updates a QoS configuration is used as an example. The terminal device selects a QoS configuration (for example, selects one QoS configuration from the at least one QoS configuration indicated by the N4 rule as a QoS configuration selected by the terminal device) according to the N4 rule obtained in the phase 1, updates a configuration of the QoS flow to the selected QoS configuration, and sends information 1 to the RAN device. Correspondingly, the RAN device receives the information 1 from the terminal device. The information 1 indicates the selected QoS configuration. The RAN device updates the configuration of the QoS flow based on the information 1. In addition, the RAN device sends information 2 to the UPF network element. Correspondingly, the UPF network element receives the information 2 from the RAN device. The information 2 indicates the selected QoS configuration. The UPF network element updates the configuration of the QoS flow based on the information 2.

The following describes in detail the communication method in embodiments of this application.

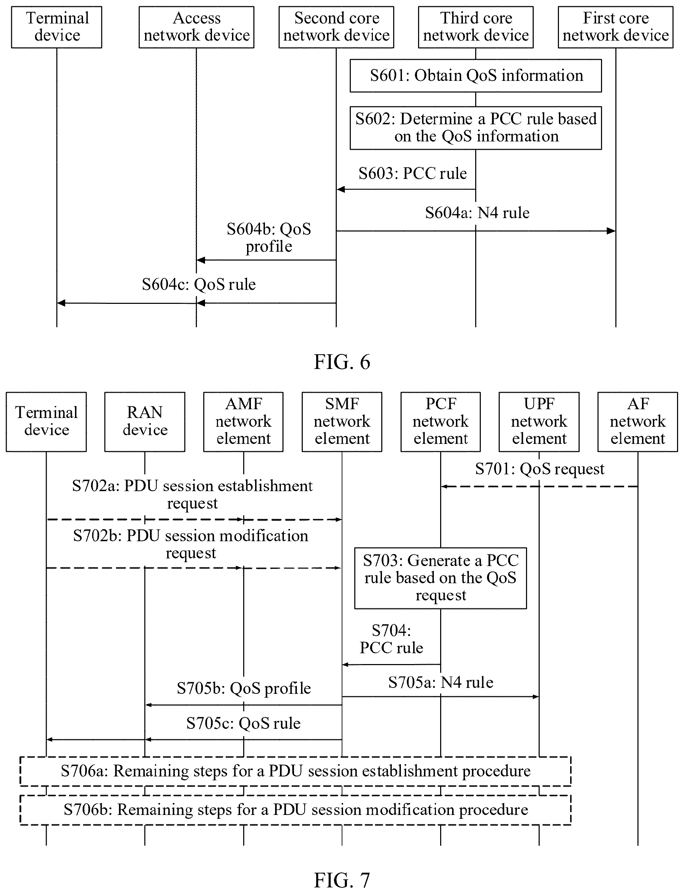

As shown in FIG. 6, a communication method provided in an embodiment of this application includes the following operations.

S601: A third core network device obtains QoS information.

For example, the third core network device is described as follows:
In this embodiment of this application, the third core network device is configured to provide policy rule information and the like. For example, the third core network device is a policy control network element. In an example of a 5G communication system, the third core network device is a PCF network element.

For example, the QoS information is described as follows:
In this embodiment of this application, the QoS information includes (or indicates) a first QoS requirement and a second QoS requirement of a service, to represent at least two QoS requirements of the service in a running process. Each QoS requirement includes but is not limited to at least one of the following: a delay requirement, a reliability requirement, a bandwidth requirement, and the like.

For example, in the first QoS requirement, the delay requirement is 5 ms, a PER is 99.99%, and the bandwidth requirement is 10 MHz. In the second QoS requirement, the delay requirement is 10 ms, a PER is 99.9%, and the bandwidth requirement is 5 MHz.

Optionally, the QoS information may alternatively include (or indicate) a QoS requirement range, to represent a possible dynamic change range of the QoS requirement of the service in the running process. For example, each QoS requirement includes but is not limited to at least one of the following: a delay requirement range, a reliability requirement range, a bandwidth requirement range, and the like.

Optionally, the QoS information alternatively includes (or indicates) a currently used (or valid) QoS requirement. For example, the QoS information indicates that the currently used (or valid) QoS requirement is the first QoS requirement. The currently used (or valid) QoS requirement may be understood as a QoS requirement of the service during current running.

Optionally, the QoS information further includes a QoS validation condition. The QoS validation condition indicates a condition (for example, validation time, a validation place, or a validation event) for the QoS requirement to take effect.

For example, the QoS validation condition indicates the time in which the QoS requirement is valid. The time indicated by the QoS validation condition may be absolute time, for example, 09:00 to 19:00, or may be relative time, for example, a 1^{st} slot to a 3^{rd} slot of each frame, or may be continuous validation duration, for example, continuous 10s since a QoS configuration is updated. This is not limited in this embodiment of this application.

For another example, the QoS validation condition indicates the place at which the QoS requirement is valid. The place indicated by the QoS validation condition may be a location of a terminal device, for example, a cell or a tracking area (tracking area, TA) in which the terminal device is located. This is not limited in this embodiment of this application.

For still another example, the QoS validation condition indicates the event in which the QoS requirement is valid. The event indicated by the QoS validation condition may include that a network is not congested, for example, a channel busy ratio (channel busy ratio, CBR), a channel occupancy ratio (channel occupancy ratio, CR), channel interference strength (for example, a received signal strength indicator (received signal strength indicator, RSSI) or reference signal received power (reference signal received power, RSRP)), a network congestion degree, or the like is lower than a preset value.

Optionally, the QoS information further indicates duration of the QoS requirement. For example, the QoS information indicates that duration of the first QoS requirement is three slots (or radio frames) or 3s, and duration of the second QoS requirement is four slots (or radio frames) or 4s.

Optionally, the QoS information further includes a trigger condition (trigger condition). The trigger condition is used to assist a communication device side (for example, a terminal device, an access network device, or a first core network device) in monitoring and triggering a QoS configuration update. That is, if the communication device side (for example, the terminal device, a RAN device, or a UPF network element) detects that the trigger condition is met, the QoS configuration update is triggered.

For example, the trigger condition includes an IP quintuple, internet protocol version 6 (internet protocol version 6, IPv6) header extension information, a service traffic feature change, and the like. The IP quintuple and IPv6 header extension information is related to the QoS flow. When the trigger condition is met, the QoS configuration of the QoS flow is updated.

Optionally, the QoS information further indicates an execution body. The execution body indicated by the QoS information is configured to determine whether to update the QoS configuration. For example, the execution body determines, based on the trigger condition, whether to update the QoS configuration and determines a target QoS configuration.

For example, if the execution body indicated by the QoS information is the terminal device, it means that the terminal device determines (based on the trigger condition) whether to update the QoS configuration.

For another example, if the execution body indicated by the QoS information is the access network device, it means that the access network device determines (based on the trigger condition) whether to update the QoS configuration.

For still another example, if the execution body indicated by the QoS information is the first core network device, it means that the first core network device determines (based on the trigger condition) whether to update the QoS configuration.

In addition, the QoS information may alternatively have another name, for example, dynamic QoS information, a QoS request, or a dynamic QoS request (dynamic QoS request). This is not limited in embodiments of this application.

For example, an implementation process of S601 includes the following implementations.

In a possible implementation, an application server sends the QoS information to the third core network device. Correspondingly, the third core network device receives the QoS information from the application server.

For example, the QoS information is included in an AF request (AF request).

In another possible implementation, the QoS information is pre-configured in the third core network device, or the communication system predefines the QoS information. This is not limited in this embodiment of this application.

For the third core network device, after obtaining the QoS information, the third core network device performs S602.

S602: The third core network device determines a PCC rule based on the QoS information.

For example, the third core network device determines the PCC rule based on the QoS information, subscription information of a user, and/or a local policy.

The PCC rule indicates the QoS configuration.

The following describes the QoS configuration indicated by the PCC rule by using two examples (the following example 1 and example 2).

Example 1: In the QoS configuration indicated by the PCC rule, when a first QoS parameter in the QoS configuration is a first value, the QoS configuration meets the first QoS requirement; or when the first QoS parameter in the QoS configuration is a second value, the QoS configuration meets the second QoS requirement.

In Example 1, the PCC rule includes one group of QoS parameter sets (QoS Parameter Sets). The group of QoS parameter sets may be described as a basic QoS parameter set (QoS Parameter Set). The group of QoS parameter sets includes a first QoS parameter (QoS param) and a step (step). Alternatively, the group of QoS parameter sets includes the first QoS parameter and an adjustment range of the first QoS parameter.

In the basic QoS parameter set, the first QoS parameter is an adjustable QoS parameter. For example, the terminal device, the access network device, or the first core network device adjusts the first QoS parameter, to update the QoS configuration and meet a dynamically changing QoS requirement. For example, when the first QoS parameter is the first value, the QoS configuration indicated by the basic QoS parameter set meets the first QoS requirement. When the first QoS parameter is the second value, the QoS configuration indicated by the basic QoS parameter set meets the second QoS requirement. Optionally, the step may be understood as a minimum granularity for adjusting the first QoS parameter.

For example, the basic QoS parameter set includes QoS parameters such as a PDB, a PER, and a bandwidth parameter. For example, when the basic QoS parameter set includes the step, the first QoS parameter may be the bandwidth parameter, and the step may be 1 megabit. For another example, when the basic QoS parameter set includes the adjustment range corresponding to the first QoS parameter, the first QoS parameter may be the PDB, and the adjustment range of the PDB is from 5 ms to 20 ms.

In Example 1, if a value of the first QoS parameter changes, it means that the QoS configuration update needs to be triggered.

Example 2: The PCC rule indicates multiple QoS configurations, a first QoS configuration in the multiple QoS configurations meets the first QoS requirement, and a second QoS configuration in the multiple QoS configurations meets the second QoS requirement.

In Example 2, the PCC rule includes at least two QoS parameter sets. Each group of QoS parameter sets indicates a QoS configuration, and QoS configurations indicated by different QoS parameter sets meet different QoS requirements. For example, the PCC rule includes a first QoS parameter set and a second QoS parameter set. The first QoS parameter set indicates a first QoS configuration, and the first QoS configuration meets the first QoS requirement. The second QoS parameter set indicates a second QoS configuration, and the second QoS configuration meets the second QoS requirement.

In Example 2, if the configuration of the QoS flow is updated from one of the multiple QoS configurations to another QoS configuration, it means that the QoS configuration update needs to be triggered.

Optionally, in at least one group of QoS parameter sets of the PCC rule, each group of QoS parameter sets is identified by an index. The index identifying the QoS parameter set may be pre-configured, or may be configured by the third core network device. This is not limited in this embodiment of this application.

Optionally, the PCC rule indicates one or more of the following: the currently used (or valid) QoS requirement, the QoS validation condition, the duration of the QoS requirement, the trigger condition, or the execution body. For details, refer to the descriptions of S601. Details are not described again.

For the third core network device, after determining the PCC rule, the third core network device performs S603.

S603: The third core network device sends the PCC rule to a second core network device. Correspondingly, the second core network device receives the PCC rule from the third core network device.

For example, the second core network device is described as follows:

In this embodiment of this application, the second core network device is a session management network element. In an example of the 5G communication system, the second core network device is an SMF network element.

For the PCC rule, refer to the descriptions of S602. Details are not described again.

For example, an implementation process of S603 includes:

The third core network device sends the PCC rule to the second core network device through a first process. Correspondingly, the second core network device receives the PCC rule from the third core network device through the first process.

The first process includes a PDU session establishment process or a PDU session modification process.

For example, the PDU session establishment process may be denoted as a session management policy association procedure (SM Policy Association procedure). The second core network device (for example, the SMF network element) initiates the SM policy association procedure, and obtains the PCC rule from the third core network device (for example, the PCF network element) through the SM policy association procedure.

For another example, the PDU session establishment process may be denoted as a session management policy association modification procedure. The second core network device (for example, the SMF network element) initiates the session management policy association modification procedure, and obtains the PCC rule from the third core network device (for example, the PCF network element) through the session management policy association modification procedure.

For still another example, the PDU session establishment process may be denoted as a session management policy association modification procedure. The third core network device (for example, the PCF network element) initiates the session management policy association modification procedure, and sends the PCC rule to the second core network device (for example, the SMF network element) through the session management policy association modification procedure.

For the second core network device, after obtaining the PCC rule, the second core network device performs S604a, S604b, or S604c.

S604a: The second core network device determines an N4 rule according to the PCC rule. The second core network device sends the N4 rule to the first core network device. Correspondingly, the first core network device receives the N4 rule from the second core network device.

For example, the first core network device is described as follows:
In this embodiment of this application, the first core network device is a user plane network element. In an example of the 5G communication system, the first core network device may be a UPF network element.

Optionally, the N4 rule indicates at least one QoS configuration. Refer to the descriptions of S603. Details are not described again.

For example, when the N4 rule includes the basic QoS parameter set, it may be understood as that the N4 rule indicates one QoS configuration. The QoS configuration indicated by the N4 rule may be dynamically updated. For example, in the QoS configuration indicated by the N4 rule, the first QoS parameter may be dynamically adjusted. If the first QoS parameter is adjusted, it means that the QoS configuration is updated. Alternatively, the basic QoS parameter set includes a dynamic adjustment range of the first QoS parameter, that is, the first QoS parameter may be dynamically adjusted within the range.

For another example, when the N4 rule includes at least two groups of QoS parameter sets, it may be understood as that the N4 rule indicates at least two QoS configurations. For example, the N4 rule indicates the first QoS configuration and the second QoS configuration.

Optionally, the N4 rule indicates the currently used (or valid) QoS requirement, the QoS validation condition, or the duration of the QoS requirement. For details, refer to the descriptions of S601. Details are not described again.

Optionally, the N4 rule includes indication information a1, and the indication information a1 indicates that a QoS configuration is updatable. The QoS configuration indicated by the indication information a1 is a configuration of a QoS flow used for service transmission between the terminal device and the first core network device (for example, the UPF network element). It may be understood as that after the first core network device receives the indication information a1, the first core network device may dynamically update the QoS configuration of the QoS flow based on the indication information a1.

Optionally, the N4 rule includes indication information a2, and the indication information a2 indicates that the execution body is the first core network device. Refer to the descriptions of S603. Details are not described again. It may be understood as that the indication information a2 indicates that the first core network device triggers the QoS configuration update. In other words, the indication information a2 indicates the first core network device to monitor a service requirement and trigger the QoS configuration update.

It should be understood that, it can be learned from the indication information a2 that the QoS configuration is updatable. In other words, when the N4 rule includes the indication information a2, the N4 rule may not include the indication information a1.

Optionally, the N4 rule indicates the trigger condition. To be specific, the trigger condition is used by the user plane network element to determine whether to trigger the QoS configuration update. The trigger condition is used to determine whether a service feature of the service is updated. For example, if a service traffic feature changes, or a service protocol layer explicitly notifies, through a notification message, that the service requirement changes, it means that the service feature of the service is updated.

S604b: The second core network device determines a QoS profile according to the PCC rule. The second core network device sends the QoS profile to the access network device. Correspondingly, the access network device receives the QoS profile from the second core network device.

For example, the access network device may be a RAN device.

Optionally, the QoS profile indicates at least one QoS configuration. Refer to the descriptions of S603. Details are not described again.

For example, when the QoS profile includes the basic QoS parameter set, the basic QoS parameter set indicates the QoS configuration. The QoS configuration indicated by the basic QoS parameter set may be dynamically updated. For example, in the basic QoS parameter set, the first QoS parameter may be dynamically adjusted. If the first QoS parameter is adjusted, it means that the QoS configuration is updated. Alternatively, the basic QoS parameter set includes the dynamic adjustment range of the first QoS parameter, that is, the first QoS parameter may be dynamically adjusted within the range.

For another example, when the QoS profile includes at least two groups of QoS parameter sets, the QoS profile may alternatively be replaced with multiple QoS profiles (multiple QoS profiles). The at least two groups of QoS parameter sets include the first QoS parameter set and the second QoS parameter set, the first QoS parameter set indicates the first QoS configuration, and the second QoS parameter set indicates the second QoS configuration. It may be understood as that the QoS profile indicates the first QoS configuration and the second QoS configuration.

Optionally, the QoS profile indicates a currently used (or valid) QoS requirement, the QoS validation condition, or the duration of the QoS requirement. For details, refer to the descriptions of S601. Details are not described again.

Optionally, the QoS profile includes indication information b1, and the indication information b1 indicates that a QoS configuration is updatable. The QoS configuration indicated by the indication information b1 is a configuration of a QoS flow used for service transmission between the terminal device and the first core network device (for example, the UPF network element). It may be understood as that after the access network device receives the indication information b1, the access network device may dynamically update the QoS configuration of the QoS flow based on the indication information b1.

That the access network device updates the QoS configuration of the QoS flow may also be understood as follows: The access network device performs dynamic resource adjustment based on information (for example, information X1 or information Y1 described below) on a side of the terminal device and/or the first core network device, for example, performs efficient resource scheduling based on information (for example, the information X1 or the information Y1 described below) provided by the terminal device and/or the first core network device. For example, after the access network device learns of a change in a traffic feature of the service (for example, information such as a data volume, duration, or expected time of arrival that are of burst traffic, a periodicity of the burst traffic, and a start or an end of a data burst volume), the access network device may flexibly schedule network resources, to ensure the service transmission. In addition, the access network device can allocate a resource to another service or another user for usage, to further improve resource utilization. For another example, if the access network device determines, based on the change in the traffic feature of the service, that no data arrives within a future period of time, the access network device allocates a resource to another service or another user for usage, to improve resource utilization.

It should be supplemented that in this application, the data burst volume may include at least one data packet. For example, sorting is performed based on a sending (or receiving) sequence. A 1^{st} data packet in the at least one data packet may be understood as a 1^{st} sent (or received) data packet. A last data packet in the at least one data packet may be understood as a last sent (or received) data packet.

The start of the data burst volume may be understood as a 1^{st} data packet in at least one data packet corresponding to the data burst volume. In addition, the start of the data burst volume may also be described as a start of burst data or a start of burst traffic.

Information about the start of the data burst volume may be understood as that the information indicates the 1^{st} data packet (namely, the 1^{st} data packet in the at least one data packet corresponding to the data burst volume).

The end of the data burst volume may be understood as a last data packet in the at least one data packet corresponding to the data burst volume. In addition, the end of the data burst volume may also be described as an end of the burst data or an end of the burst traffic.

Information about the end of the data burst volume may be understood as that the information indicates the last data packet (namely, the last data packet in the at least one data packet corresponding to the data burst volume).

Optionally, the QoS profile includes indication information b2, and the indication information b2 indicates that the execution body is the access network device. Refer to the descriptions of S603. Details are not described again. It may be understood as that the indication information b2 indicates that the access network device triggers the QoS configuration update. In other words, the indication information b2 indicates the access network device to monitor the service requirement and trigger the QoS configuration update.

It should be understood that, it can be learned from the indication information b2 that the QoS configuration is updatable. In other words, when the QoS profile includes the indication information b2, the QoS profile may not include the indication information b1.

Optionally, the QoS configuration indicates the trigger condition, and the trigger condition is used by the access network device to determine whether to trigger the QoS configuration update. The trigger condition is used to determine whether the service feature of the service is updated. For example, if the service traffic feature changes, or the service protocol layer explicitly notifies, through the notification message, that the service requirement changes, it means that the service feature of the service is updated.

S604c: The second core network device determines a QoS rule according to the PCC rule. The second core network device sends the QoS rule to the terminal device. Correspondingly, the terminal device receives the QoS rule from the second core network device.

Optionally, the QoS rule indicates at least one QoS configuration. Refer to the descriptions of S603. Details are not described again.

For example, when the QoS rule includes the basic QoS parameter set, the basic QoS parameter set indicates the QoS configuration. The QoS configuration indicated by the basic QoS parameter set may be dynamically updated. For example, in the basic QoS parameter set, the first QoS parameter may be dynamically adjusted. If the first QoS parameter is adjusted, it means that the QoS configuration is updated. Alternatively, the basic QoS parameter set includes the dynamic adjustment range of the first QoS parameter, that is, the first QoS parameter may be dynamically adjusted within the range.

For another example, when the QoS rule includes at least two groups of QoS parameter sets, it may be understood as that the QoS rule indicates at least two QoS configurations. For example, the QoS rule indicates the first QoS configuration and the second QoS configuration.

Optionally, the QoS rule indicates the currently used (or valid) QoS configuration, the QoS validation condition, or the duration of the QoS requirement. For details, refer to the descriptions of S601. Details are not described again.

Optionally, the QoS rule includes indication information c1, and the indication information c1 indicates that a QoS configuration is updatable. The QoS configuration indicated by the indication information c1 is a configuration of a QoS flow used for service transmission between the terminal device and the first core network device (for example, the UPF network element). It may be understood as that after the terminal device receives the indication information c1, the terminal device may dynamically update the QoS configuration of the QoS flow based on the indication information c1.

Optionally, the QoS rule includes indication information c2, and the indication information c2 indicates that the execution body is the terminal device. Refer to the descriptions of S603. Details are not described again. It may be understood as that the indication information c2 indicates that the terminal device triggers the QoS configuration update. In other words, the indication information c2 indicates the terminal device to monitor the service requirement and trigger the QoS configuration update.

It should be understood that, it can be learned from the indication information c2 that the QoS configuration is updatable. In other words, when the QoS rule includes the indication information c2, the QoS rule may not include the indication information c1.

Optionally, the QoS rule indicates the trigger condition, and the trigger condition is used by the terminal device to determine whether to trigger the QoS update. The trigger condition is used to determine whether the service feature of the service is updated. For example, if the service traffic feature changes, or the service protocol layer explicitly notifies, through the notification message, that the service requirement changes, it means that the service feature of the service is updated.

In this way, the second core network device implements a parameter delivery process of the QoS configuration by performing S604a, S604b, and S604c.

With reference to an example shown in FIG. 7, the following describes in detail specific implementation of the communication method shown in FIG. 6.

FIG. 7 is a schematic flowchart of a communication method according to an embodiment of this application. The first core network device in FIG. 6 may be a UPF network element shown in FIG. 7, the second core network device in FIG. 6 may be an SMF network element shown in FIG. 7, the third core network device in FIG. 6 may be a PCF network element shown in FIG. 7, the access network device in FIG. 6 may be a RAN device shown in FIG. 7, and the application server in FIG. 6 may be an AF network element shown in FIG. 7.

Specifically, in FIG. 7, the communication method in this embodiment of this application includes the following steps.

S701: Optionally, the AF network element sends a QoS request to the PCF network element. Correspondingly, the PCF network element receives the QoS request from the AF network element.

The QoS request includes QoS information. For the QoS information, refer to the descriptions of S701. Details are not described again.

In addition, the QoS request may alternatively have another name, for example, dynamic QoS request information or a dynamic QoS request (dynamic QoS request). This is not limited in embodiments of this application.

For example, an implementation process of S701 includes:
For example, the AF network element sends an AF request (AF request) to the PCF network element. Correspondingly, the PCF network element receives the AF request from the AF network element.

The AF request includes the QoS information.

For another example, the AF network element sends the QoS request to the PCF network element through a capability exposure interface. Correspondingly, the PCF network element receives the QoS request from the AF network element through the capability exposure interface.

For still another example, the AF network element is in a trusted domain, and the AF network element sends the QoS request to the PCF network element. To be specific, the AF network element sends the QoS request to the PCF network element by invoking a service interface of the PCF network element, for example, an Npcf_Policy Authorization service interface.

In another case, the AF network element is in an untrusted domain, and the AF network element sends the QoS request to the PCF network element via a NEF network element. To be specific, the AF network element sends the QoS request to the NEF network element by invoking a service interface of the NEF network element, for example, an Nnef_AFSessionWithQoS service interface, and the NEF network element sends the QoS request to the PCF network element by invoking a service interface of the PCF, for example, an Npcf_PolicyAuthorization service interface.

S702a: Optionally, when a terminal device initiates a PDU session establishment procedure, the terminal device sends a PDU session establishment request (PDU Session Establishment Request) to an AMF network element. Correspondingly, the AMF network element receives the PDU session establishment request from the terminal device. The AMF network element sends the PDU session establishment request to the SMF network element. Correspondingly, the SMF network element receives the PDU session establishment request from the AMF network element.

The PDU session establishment request is used to request to establish a PDU session.

For example, for an implementation process of S702a, refer to a related technology. Details are not described.

S702b: Optionally, when the terminal device initiates a PDU session modification procedure, the terminal device sends a PDU session modification request to the AMF network element. Correspondingly, the AMF network element receives the PDU session modification request (PDU Session Modification Request) from the terminal device. The AMF network element sends the PDU session modification request to the SMF network element. Correspondingly, the SMF network element receives the PDU session modification request from the AMF network element.

The PDU session modification request is used to request to modify the PDU session.

For example, for an implementation process of S702b, refer to a related technology. Details are not described.

S703: The PCF network element generates a PCC rule based on the QoS request.

Specifically, the PCF network element generates the PCC rule based on the QoS request, subscription information of a user, and a local policy.

For the PCC rule, refer to the descriptions of S602. Details are not described again.

S704: The PCF network element sends the PCC rule to the SMF network element. Correspondingly, the SMF network element receives the PCC rule from the PCF network element.

For example, when the terminal device performs S702a, the SMF network element initiates a session management policy association procedure (SM Policy Association procedure), and obtains the PCC rule from the PCF network element through the SM policy association procedure.

For another example, when the terminal device performs S702b, the SMF network element initiates a session management policy association modification procedure, and obtains the PCC rule from the PCF network element through the session management policy association modification procedure.

For still another example, when the terminal device does not perform S702a and S702b, the PCF network element initiates a session management policy association modification procedure, and sends the PCC rule to the SMF network element through the session management policy association modification procedure.

For the SMF network element, after obtaining the PCC rule, the SMF network element performs S705a, S705b, or S705c.

S705a: The SMF network element determines an N4 rule according to the PCC rule. The SMF network element sends the N4 rule to the UPF network element. Correspondingly, the UPF network element receives the N4 rule from the SMF network element.

For an implementation process of S705a, refer to the descriptions of S604a. Details are not described again.

For example, the implementation process of S705a includes:
For example, the SMF network element sends the N4 rule to the UPF network element through an N4 session establishment (N4 Session Establishment) procedure. Correspondingly, the UPF network element receives the N4 rule from the SMF network element through the N4 session establishment procedure.

For another example, the SMF network element sends the N4 rule to the UPF network element through an N4 session modification (N4 Session Modification) procedure. Correspondingly, the UPF network element receives the N4 rule from the SMF network element through the N4 session modification procedure.

S705b: The SMF network element determines a QoS profile according to the PCC rule and the local policy. The SMF network element sends the QoS profile to the RAN device. Correspondingly, the RAN device receives the QoS profile from the SMF network element.

For an implementation process of S705b, refer to the descriptions of S604b. Details are not described again.

S705c: The SMF network element determines a QoS rule according to the PCC rule and/or the local policy. The SMF network element sends the QoS rule to the terminal device. Correspondingly, the terminal device receives the QoS rule from the SMF network element.

For an implementation process of S705c, refer to the descriptions of S604c. Details are not described again.

For example, the implementation process of S705c includes:
For example, the SMF network element sends the QoS rule to the RAN device via the AMF network element. Correspondingly, the RAN device receives the QoS rule from the SMF network element via the AMF network element. The RAN device sends the QoS rule to the terminal device. Correspondingly, the terminal device receives the QoS rule from the RAN device. That is, the SMF network element sends the QoS rule to the terminal device via the AMF network element and the RAN device. Correspondingly, the terminal device receives the QoS rule from the SMF network element via the RAN device and the AMF network element. In the foregoing process, the RAN device is configured to forward the QoS rule, and the QoS rule is included in a PDU session establishment/modification receiving message and sent to a side of the terminal device.

The SMF network element configures a QoS parameter set by performing S705a, S705b, and S705c.

For the terminal device, the AMF network element, the SMF network element, and the UPF network element, S706a or S706b is further performed.

S706a: When the PDU session establishment procedure is performed, the terminal device, the AMF network element, the SMF network element, and the UPF network element perform remaining steps for the PDU session establishment (remaining steps for PDU Session Establishment) procedure.

For the PDU session establishment procedure, refer to a related 3GPP technical specification. Details are not described.

S706b: When the PDU session modification procedure is performed, the terminal device, the AMF network element, the SMF network element, and the UPF network element perform remaining steps for the PDU session modification (remaining steps for PDU Session Modification) procedure.

For the PDU session modification procedure, refer to a related 3GPP technical specification. Details are not described.

In conclusion, the PCF network element generates at least one group of QoS parameter sets based on the QoS request, and provides the at least one group of QoS parameter sets for the SMF network element. The SMF network element provides the at least one group of QoS parameter sets for the UPF network element, the RAN device, and the terminal device, to implement configuration of the QoS parameter set, and lay a foundation for dynamically updating a QoS configuration.

The foregoing describes a configuration process of the QoS parameter set.

The following describes an update process of the QoS configuration.

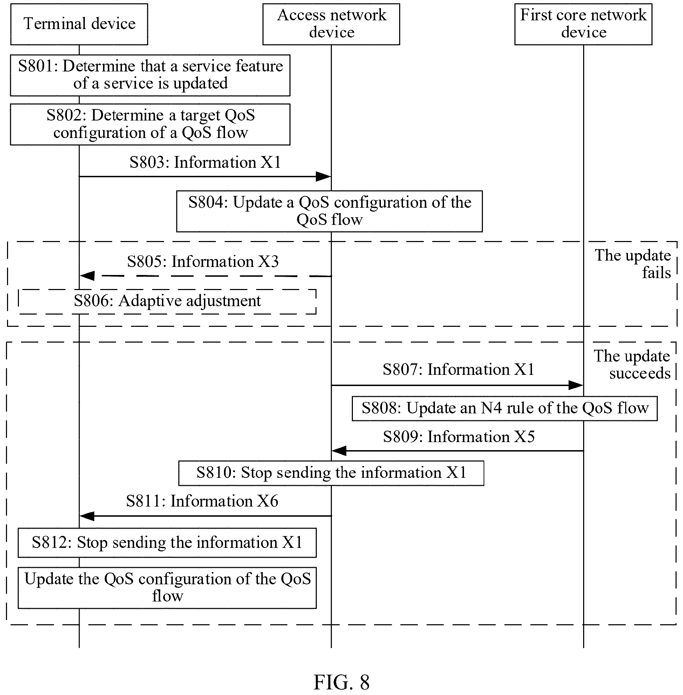

As shown in FIG. 8, that a terminal device triggers a QoS configuration update is used as an example. A communication method provided in an embodiment of this application includes the following operations.

S801: The terminal device determines that a service feature of a service is updated.

For example, when a trigger condition c1 is met, the terminal device determines that the service feature of the service is updated.

The trigger condition c1 includes at least one of the following conditions.

Trigger condition c1-1: A difference between a data volume x1 and a data volume x2 is greater than a threshold x. The data volume x1 is a data volume of the service transmitted in a time unit x1, and the data volume x2 is a data volume of the service transmitted in a time unit x2. That is, a traffic feature of the service changes, for example, there is a downlink data burst volume. In other words, the terminal device determines, based on the downlink data burst volume, that the traffic feature of the service (namely, the service feature of the service) changes, that is, a network requirement of the service changes.

In this embodiment of this application, the data volume x1 and the data volume x2 are data volumes of a same service, and service data of the service is transmitted over a same QoS flow.

In this embodiment of this application, the time unit may be one or more symbols, one or more slots, one or more subframes, one or more radio frames, or the like. For the symbol, the slot, the subframe, and the radio frame, refer to a related 3GPP technical specification. Details are not described.

Trigger condition c1-2: A notification message x is obtained. The notification message x indicates a network requirement of the service. For example, the notification message x indicates a size of a media frame, and the media frame includes data of the service. The notification message x is a notification message sent by an application (application, APP) layer of the terminal device. When an application needs to receive or send a large quantity of media frames, the notification message x indicates the network requirement of the service, so that the terminal device learns that a network requirement of the service is updated.

Optionally, the notification information x includes the change in the network requirement or traffic feature of the service, for example, a bandwidth requirement (or a size of burst traffic) of 20 MHz, and duration of the network requirement (or duration of the burst traffic).

The notification message x may be a message separately sent by the application layer to an underlying communication module of the terminal device, or a message carried in a data packet in a process of sending the data packet by the application layer, for example, carried in a protocol header or an extension header of a protocol like a TCP/UDP or an RTP of the data packet.

Trigger condition c1-3: A QoS configuration of the QoS flow expires. The QoS flow is used for transmission of the service. The QoS configuration of the QoS flow has a valid time period. For example, a valid time period of a QoS configuration 1 is denoted as a time period 1, and a valid time period of a QoS configuration 2 is denoted as a time period 2. The QoS configuration 1 can meet a requirement of a service feature 1, and the QoS configuration 2 can meet a requirement of a service feature 2. When the time period 1 expires, it means that the service feature of the service is updated, that is, the service feature is updated from the service feature 1 to the service feature 2, or a validation condition corresponding to the QoS configuration is no longer met. Correspondingly, the terminal device needs to update the QoS configuration, for example, update the QoS configuration from the QoS configuration 1 to the QoS configuration 2.

It should be understood that the trigger condition c1 may be configured by a second core network device. For details, refer to the descriptions of the QoS rule. Details are not described again. Alternatively, the trigger condition c1 may be pre-configured. This is not limited in this embodiment of this application.

When determining that the service feature of the service is updated, the terminal device performs S802 and S803.

S802: Optionally, the terminal device determines a target QoS configuration of the QoS flow.

This step is optional. To be specific, after determining that the service feature is updated, the terminal device does not perform S802, but performs S803.

For example, the target QoS configuration is a configuration indicated by a target QoS parameter set.

For example, when the QoS rule includes at least two groups of QoS parameter sets, the terminal device selects, based on an updated service feature, one group of QoS parameter sets from the at least two groups of QoS parameter sets as the target QoS parameter set. Correspondingly, the terminal device determines the target QoS configuration of the QoS flow based on the target QoS parameter set. In a possible alternative description, the QoS rule includes at least two QoS configurations. The terminal device determines the target QoS configuration in the at least two QoS configurations based on the updated service feature.

Optionally, when the QoS rule includes the at least two groups of QoS parameter sets, each group of QoS parameter sets has one index. Correspondingly, the terminal device can also determine an index (index) of the target QoS parameter set, and the index is denoted as a target index. That the target index identifies the target QoS parameter set may be understood as that the target index is used to determine the target QoS configuration.

For another example, when the QoS rule includes one group of QoS parameter sets (for example, the foregoing basic QoS parameter set), the terminal device determines a first QoS parameter (for example, determines a value of the first QoS parameter) in the QoS parameter set based on the updated service feature. When the value of the first QoS parameter is determined, the foregoing QoS configuration indicated by the QoS parameter set is the target QoS configuration. In a possible alternative description, the terminal device determines the first QoS parameter in the QoS configuration of the QoS flow based on the updated service feature, to determine the target QoS configuration.

Optionally, when the QoS rule includes one group of QoS parameter sets (for example, the foregoing basic QoS parameter set), the terminal device determines a target parameter (value) based on a value before the first QoS parameter is adjusted, a value after the first QoS parameter is adjusted, and a step. For example, the first QoS parameter is bandwidth. If the value after the first QoS parameter is adjusted is 10 MHz, the value before the first QoS parameter is adjusted is 0 MHz, and the step is 1 MHz, a value of the target parameter is 10.

In this embodiment of this application, the target parameter is used to determine the target QoS configuration.

Optionally, if there are multiple first QoS parameters, that is, there may be multiple adjustable QoS parameters, the target parameter includes the first QoS parameter and a quantity of adjustment steps, that is, the bandwidth and 10.

For still another example, when the QoS rule includes one group of QoS parameter sets (for example, the foregoing basic QoS parameter set, which includes an adjustment range of the first QoS parameter), the terminal device determines the first QoS parameter (for example, determines the value of the first QoS parameter) within the adjustment range of the first QoS parameter based on the updated service feature. When the value of the first QoS parameter is determined, the foregoing QoS configuration indicated by the QoS parameter set is the target QoS configuration. In a possible alternative description, the terminal device determines the first QoS parameter in the QoS configuration of the QoS flow based on the updated service feature, to determine the target QoS configuration. For example, the first QoS parameter is the bandwidth, and the adjustment range of the first QoS parameter is from 10 MHz to 50 MHz. If the value after the first QoS parameter is adjusted is 30 MHz, the value of the target parameter is 30.

Optionally, if there are multiple first QoS parameters, that is, there are multiple adjustable QoS parameters, correspondingly, there are multiple adjustment ranges. For example, there are two first QoS parameters, which are respectively denoted as a QoS parameter 1 and a QoS parameter 2. An adjustment range of the QoS parameter 1 is denoted as an adjustment range 1, and an adjustment range of the QoS parameter 2 is denoted as an adjustment range 2. In this case, the target parameter includes the first QoS parameter and a target value after adjustment, for example, the bandwidth and 30.

In this embodiment of this application, the target parameter is used to determine the target QoS configuration.

S802 may alternatively be replaced with the following description:

When the service feature of the service is updated, the terminal device determines a target QoS rule of the QoS flow based on the updated service feature. The target QoS rule indicates the target QoS configuration.

Optionally, the terminal device updates the QoS configuration of the QoS flow according to the target QoS rule, for example, updates the QoS configuration of the QoS flow to the target QoS configuration. For details, refer to descriptions after S812. Details are not described temporarily.

S803: The terminal device sends information X1 to an access network device. Correspondingly, the access network device receives the information X1 from the terminal device.

The information X1 indicates the target QoS configuration of the QoS flow.

For example, the information X1 may include the following information.

For example, the information X1 includes the target index. For the target index, refer to the descriptions of S802. Details are not described again.

For another example, the information X1 includes the target parameter. For the target parameter, refer to the descriptions of S802. Details are not described again.

For still another example, the information X1 includes information about the target QoS configuration. For example, the information X1 includes one or more of the following: a value of a PDB, a value of a PER, a size of a maximum data burst volume (max data burst volume, MDBV), or a value of bandwidth.

For still another example, if S802 is optional, the information X1 includes a target network requirement of the service, for example, the updated service feature of the service (as described in S801), which may be specifically an end of the frame, a size of a data burst volume, a periodicity of the data burst volume, a start or an end of the data burst volume, duration of the data burst volume, and/or time of arrival of the data burst volume.

It should be supplemented that, in this application, the frame may correspond to at least one data packet. For example, sorting is performed based on a sending (or receiving) sequence. A 1^{st} data packet in the at least one data packet may be understood as a 1^{st} sent (or received) data packet. A last data packet in the at least one data packet may be understood as a last sent (or received) data packet.

The end of the frame may be understood as a last data packet in the at least one data packet corresponding to the frame.

For the start of the data burst volume and the end of the data burst volume, refer to the descriptions of S604b. Details are not described again.

For example, the information X1 may be carried in the following information.

For example, the information X1 is carried at a PDCP layer of an uplink data packet. That is, S803 may alternatively be described as: The terminal device sends the data packet to the access network device. Correspondingly, the access network device receives the data packet from the terminal device. The PDCP layer of the data packet includes the information X1.

For another example, the information X1 is carried in a media access control control element (media access control control element, MAC CE). That is, S803 may alternatively be described as: The terminal device sends the MAC CE to the access network device. Correspondingly, the access network device receives the MAC CE from the terminal device. The MAC CE includes the information X1.

For still another example, the information X1 is carried in RRC signaling. That is, S803 may alternatively be described as: The terminal device sends the RRC signaling to the access network device. Correspondingly, the access network device receives the RRC signaling from the terminal device. The RRC signaling includes the information X1.

It should be understood that the information X1 may alternatively be carried in another message. This is not limited in embodiments of this application.

It may be understood that when the information X1 is carried at the PDCP layer of the uplink data packet, the terminal device may continuously send the information X1 to the access network device until the terminal device receives feedback information from the access network device. For details, refer to descriptions of S811 and S812. Details are not described temporarily. In this embodiment of this application, the terminal device continuously sends the information X1 to the access network device, to help the access network device successfully receive the information X1, so that information transmission reliability is improved.

Optionally, the terminal device sends information X2 to the access network device. Correspondingly, the access network device receives the information X2 from the terminal device.

The information X2 indicates a time period X, and the time period X is a time period in which the target QoS configuration is valid. For the target QoS configuration, refer to the descriptions of S802. Details are not described again.

A manner in which the information X2 indicates the time period X may include the following descriptions:
For example, the information X2 indicates a start moment and an end moment of the time period X.

For another example, the information X2 indicates the start moment and duration of the time period X.

For still another example, the information X2 indicates the end moment of the time period X.

For still another example, the information X2 indicates the duration of the time period X.

For example, when the information X2 indicates the end moment or the duration of the time period X, the start moment of the time period X may be a moment at which the access network device receives the information X2. Alternatively, the start moment of the time period X may be a moment at which the access network device updates the QoS configuration of the QoS flow to the target QoS configuration.

It should be understood that the information X2 may be carried in an uplink data packet, a MAC CE, or RRC signaling. The uplink data packet is a data packet sent by the terminal device to the access network device. In embodiments of this application, the information X2 and the information X1 may be carried in a same message for transmission, or may be carried in different messages for transmission. This is not limited in embodiments of this application.

It should be understood that the time period X may be determined by the terminal device.

Alternatively, the time period X may be determined by a third core network device. For example, after determining the time period X, the third core network device indicates, to the second core network device according to a PCC rule, start time or a time period X for updating the service feature, and indicates the time period X to the terminal device via the second core network device.

Alternatively, the time period X may be determined by the second core network device. For example, after determining the time period X, the second core network device indicates the time period X to the terminal device.

In this embodiment of this application, a manner in which the terminal device obtains the time period X is not limited.

When receiving the information X1, the access network device performs S804:

S804: The access network device updates the QoS configuration of the QoS flow.

For the access network device, the information X1 is used to determine a QoS profile corresponding to the target QoS configuration. For the information X1, refer to the descriptions of S803. Details are not described again.

For example, when receiving the information X1, the access network device determines the target QoS configuration of the QoS flow based on the information X1, and updates the QoS configuration of the QoS flow based on the target QoS configuration. For another example, when receiving the information X1, the access network device updates a QoS profile of the QoS flow. The QoS profile indicates the QoS configuration. That the access network device updates the QoS profile of the QoS flow means that the access network device updates the QoS configuration of the QoS flow.

For still another example, when receiving the information X1, the access network device determines a target QoS profile of the QoS flow based on the information X1, and updates the QoS configuration of the QoS flow based on the target QoS profile. The target QoS profile indicates the target QoS configuration. For example, the information X1 includes the target network requirement of the service, for example, the updated service feature of the service, which may be specifically the end of the frame, the size of the data burst volume, the duration of the data burst volume, and/or the time of arrival of the data burst volume. In this case, the access network device determines a size of a maximum data burst volume (max data burst volume, MDBV) based on such at least one burst service traffic feature.

For still another example, when receiving the information X1, the access network device updates the QoS profile of the QoS flow. It may also be understood as that the access network device performs dynamic resource adjustment or efficient resource scheduling based on the information X1 sent by the terminal device. For example, if the access network device learns of the change in the traffic feature of the service (for example, information such as the data volume, the duration, and expected time of arrival that are of the burst traffic, the periodicity of the data burst volume, and the start or the end of the data burst volume), the access network device may flexibly schedule a network resource to ensure transmission of the service. In addition, the access network device can allocate the network resource to another service or another user for usage, to further improve resource utilization. For another example, if the access network device determines, based on the change in the traffic feature of the service, that no data arrives within a future period of time, the access network device allocates a radio resource to another service or another user for usage, to improve resource utilization.

Optionally, the access network device determines, based on the target QoS configuration, whether RRC reconfiguration needs to be performed. When the RRC reconfiguration needs to be performed, the access network device initiates an RRC reconfiguration procedure to the terminal device, to update the QoS configuration of the QoS flow to the target QoS configuration, or update a QoS configuration of a data radio bearer (data radio bearer, DRB) to the target QoS configuration.

For the access network device, the QoS configuration update may succeed or fail. When the QoS configuration update fails, the access network device optionally performs S805 and S806. When the QoS configuration update succeeds, the access network device optionally performs S807. Details are as follows.

S805: The access network device sends information X3 to the terminal device. Correspondingly, the terminal device receives the information X3 from the access network device.

The information X3 indicates that the access network device fails to update the QoS configuration of the QoS flow. The access network device updates the QoS configuration of the QoS flow based on the information X1.

For example, when a current network resource does not meet the target QoS configuration (namely, the target QoS configuration indicated by the information X1), or the target QoS configuration is not within a pre-authorized range of a core network (for example, multiple QoS configurations or one or more QoS parameter adjustment ranges provided by the second core network device), the access network device fails to update the QoS configuration of the QoS flow. The current network resource is an air interface resource between the access network device and the terminal device.

Optionally, the access network device sends information X4 to the terminal device. Correspondingly, the terminal device receives the information X4 from the access network device. The information X4 indicates a QoS configuration supported by the access network device.

For example, the QoS configuration supported by the access network device is denoted as a QoS configuration 1. The QoS configuration 1 is a configuration indicated by a QoS parameter set 1.

For example, when the QoS profile includes at least two groups of QoS parameter sets, the access network device selects, from the at least two groups of QoS parameter sets based on the information X1, one group of QoS parameter sets supported by the access network device as the QoS parameter set 1. If the access network device cannot accept the target QoS configuration indicated by the information X1, the access network device determines the QoS parameter set 1 in the at least two groups of QoS parameter sets. The QoS parameter set 1 is a QoS parameter set that can be supported by the current network resource and that is closest to the target QoS configuration indicated by the information X1. Alternatively, the QoS parameter set 1 is a highest QoS configuration that can be supported by the current network resource.

Further, when the QoS profile includes the at least two groups of QoS parameter sets, each group of QoS parameter sets has an index. Correspondingly, the access network device can also determine an index of the QoS parameter set 1, and the index is denoted as an index 1. Correspondingly, the information X4 includes the index 1.

For another example, when the QoS profile includes one group of QoS parameter sets (for example, the foregoing basic QoS parameter set), the access network device determines the first QoS parameter in the QoS parameter set based on the information X1 (for example, determines the value of the first QoS parameter). After the first QoS parameter is adjusted, a configuration indicated by the QoS parameter set is closest to or equal to the target QoS configuration indicated by the information X1. If the access network device cannot accept the first QoS parameter indicated by the information X1, the access network device determines a first QoS parameter. The first QoS parameter determined by the access network device is a highest QoS parameter that can be supported by the current network resource, and/or the first QoS parameter determined by the access network device is closest to the first QoS parameter indicated by the information X1. In this way, when determining the first QoS parameter, the access network device can also determine a target QoS configuration indicated by the basic QoS parameter set.

Further, when the QoS profile includes one group of QoS parameter sets (for example, the foregoing basic QoS parameter set), the access network device determines a target parameter 1 based on the value before the first QoS parameter is adjusted, the value after the first QoS parameter is adjusted, and the step. Correspondingly, the information X4 includes the target parameter 1. The target parameter 1 represents a quantity of adjustment steps of the first QoS parameter. For details, refer to the descriptions of S802. Details are not described again.

Alternatively, when the QoS profile includes one group of QoS parameter sets (for example, the foregoing basic QoS parameter set, and the basic QoS parameter set includes the adjustment range of the first QoS parameter), the access network device determines the target parameter 1 based on the adjustment range of the first QoS parameter and a current network resource status. Correspondingly, the information X4 includes the target parameter 1. The target parameter 1 represents the value of the first QoS parameter. For details, refer to the descriptions of S802. Details are not described again.

For example, the information X4 is carried in a downlink data packet. That is, the access network device sends the downlink data packet to the terminal device. Correspondingly, the terminal device receives the downlink data packet from the access network device. A PDCP layer of the downlink data packet includes the information X4.

For example, the information X4 is carried in RRC signaling. That is, the access network device sends the RRC signaling to the terminal device. Correspondingly, the terminal device receives the RRC signaling from the access network device. The RRC signaling includes the information X4.

For example, the information X4 is carried in a MAC CE. That is, the access network device sends the MAC CE to the terminal device. Correspondingly, the terminal device receives the MAC CE from the access network device. The MAC CE includes the information X4.

It should be understood that the information X4 may alternatively be carried in another message. This is not limited in embodiments of this application.

When receiving the information X3, the terminal device performs the following step.

S806: The terminal device performs adaptive adjustment.

For example, on a side of the terminal device, the application layer is notified, so that the application layer performs adjustment. For example, a size of a volume of to-be-sent data is adjusted, or a size of a volume of to-be-received data is adjusted, to match a network status.

Optionally, when the terminal device receives the information X4, the terminal device updates the QoS configuration of the QoS flow based on the information X4. For example, the terminal device updates the QoS configuration to the QoS configuration indicated by the information X4, to update the QoS configuration. Because the QoS configuration indicated by the information X4 is closest to the target QoS configuration, when the terminal device updates the QoS configuration based on the information X4, a dynamically changing service requirement can also be met as much as possible.

If the QoS configuration of the QoS flow is successfully updated, on a RAN side, to the target QoS configuration indicated by the information X1, the following step is performed.

S807: Optionally, the access network device sends the information X1 to a first core network device. Correspondingly, the first core network device receives the information X1 from the access network device.

For example, the first core network device is described as follows.

In this embodiment of this application, the first core network device is a user plane network element. In an example of a 5G communication system, the first core network device may be a UPF network element.

The information X1 indicates the target QoS configuration of the QoS flow.

For example, the information X1 includes the target index, the target parameter, or the information about the target QoS configuration. For details, refer to the descriptions of S803. Details are not described again.

For example, the information X1 may be carried in the following information:
For example, the information X1 is carried at a GTP-U layer of an uplink data packet. That is, S807 may alternatively be described as: The access network device sends the uplink data packet to the first core network device. Correspondingly, the first core network device receives the uplink data packet from the access network device. The GTP-U layer of the uplink data packet includes the information X1.

It should be understood that the information X1 may alternatively be carried in another message. This is not limited in embodiments of this application.

It may be understood that when the information X1 is carried at the GTP-U layer of the uplink data packet, the access network device may continuously send the information X1 to the first core network device until the access network device receives feedback information from the first core network device. For details, refer to descriptions of S809 and S810. Details are not described temporarily. In this embodiment of this application, the access network device continuously sends the information X1 to the first core network device, to help the first core network device successfully receive the information X1, so that information transmission reliability is improved.

Optionally, the access network device determines, based on the target QoS configuration, whether to send the information X1 to the first core network device.

For example, if only a parameter such as the PDB or the PER corresponding to the QoS flow is modified in the target QoS configuration, and a QoS parameter on a side of the first core network device is not affected, the access network device does not need to send the information X1 to the first core network device; or if the target QoS configuration is activated and established based on the information X1, the access network device needs to send the information X1 to the first core network device, to activate and establish a corresponding N4 rule.

Optionally, when the access network device receives the information X2, the access network device sends the information X2 to the first core network device. Correspondingly, the first core network device receives the information X2 from the access network device. The information X2 and the information X1 may be carried in a same message, or may be carried in different messages. This is not limited in embodiments of this application.

When receiving the information X1, the first core network device performs S808:
S808: The first core network device updates an N4 rule of the QoS flow.

For the first core network device, the information X1 is used to determine the N4 rule corresponding to the target QoS configuration. For the information X1, refer to the descriptions of S803. Details are not described again.

For example, when receiving the information X1, the first core network device determines the target QoS configuration of the QoS flow based on the information X1, and updates the QoS configuration of the QoS flow based on the target QoS configuration, that is, updates the N4 rule corresponding to the QoS flow.

For another example, when receiving the information X1, the first core network device updates the N4 rule of the QoS flow. The N4 rule indicates the QoS configuration. That the first core network device updates the N4 rule of the QoS flow means that the first core network device updates the QoS configuration of the QoS flow.

For still another example, when receiving the information X1, the first core network device determines a target N4 rule of the QoS flow based on the information X1, and updates the QoS configuration of the QoS flow according to the target N4 rule. The target N4 rule indicates the target QoS configuration.

Optionally, for the first core network device, after updating the QoS configuration, the first core network device performs the following operation:

S809: Optionally, the first core network device sends information X5 to the access network device. Correspondingly, the access network device receives the information X5 from the first core network device.

The information X5 indicates that the first core network device successfully updates the QoS configuration (or the N4 rule) of the QoS flow. The first core network device updates the QoS configuration (or the N4 rule) of the QoS flow based on the information X1.

For example, the information X5 includes the following information.

For example, the information X5 includes the target index and an acknowledgement (acknowledgment, ACK). For the target index, refer to the descriptions of S802. Details are not described again. The ACK indicates that updating to the QoS configuration corresponding to the target index succeeds. The QoS configuration corresponding to the target index may be understood as the target QoS configuration determined by the first core network device based on the target index.

For another example, the information X5 includes the target parameter and the ACK. For the target parameter, refer to the descriptions of S802. Details are not described again. The ACK indicates that updating to the QoS configuration corresponding to the target parameter succeeds. The QoS configuration corresponding to the target parameter may be understood as the target QoS configuration determined by the first core network device based on the target parameter.

When receiving the information X5, the access network device performs S810 and/or S811:
S810: Optionally, the access network device stops sending the information X1 to the first core network device, to save communication resources.
S811: Optionally, the access network device sends information X6 to the terminal device. Correspondingly, the terminal device receives the information X6 from the access network device.

The information X6 indicates that the first core network device and/or the access network device successfully update/updates the QoS configuration of the QoS flow. The first core network device updates the QoS configuration of the QoS flow based on the information X1, and the access network device updates the QoS configuration of the QoS flow based on the information X1.

For example, the information X6 includes the following information.

For example, the information X6 includes the target index and the ACK. Refer to the descriptions of the information X5. Details are not described again.

For another example, the information X6 includes the target parameter and the ACK. Refer to the descriptions of the information X5. Details are not described again.

It is easy to understand that S811 is described as follows:
Example 1: In this embodiment of this application, if the QoS configuration on a side of the access network device is successfully updated, and the QoS configuration on the side of the first core network device does not need to be updated, the access network device may perform S811 after performing S804. The information X6 indicates that the access network device successfully updates the QoS configuration of the QoS flow.

Example 2: In this embodiment of this application, if the QoS configuration on the side of the access network device is successfully updated, and the QoS configuration on the side of the first core network device is also successfully updated, the access network device may perform S811 after performing S809. The information X6 indicates that the first core network device and the access network device successfully update the QoS configuration of the QoS flow.

Example 3: In this embodiment of this application, S811 includes S811a. Optionally, S811 further includes S811b. Details are as follows:
If the QoS configuration on the side of the access network device is successfully updated (regardless of whether the QoS configuration on the side of the first core network device needs to be updated), the access network device may perform S811a after performing S804:
S811a: The access network device sends the information X6 to the terminal device. Correspondingly, the terminal device receives the information X6 from the access network device.

The information X6 indicates that the access network device successfully updates the QoS configuration of the QoS flow. It may be understood as that, in S811a, the information X6 indicates an update status of the QoS configuration on the side of the access network device, and does not indicate an update status of the QoS configuration on the side of the first core network device.

In example 3, further, if the QoS configuration on the side of the first core network device does not need to be updated, S811 includes S811a, but does not include S811b. On the contrary, if the QoS configuration on the side of the first core network device needs to be updated and the update succeeds, S811 further includes S811b:
S811b: The access network device sends the information X6 to the terminal device. Correspondingly, the terminal device receives the information X6 from the access network device.

The information X6 indicates that the first core network device successfully updates the QoS configuration of the QoS flow. It may be understood as that, in S811b, the information X6 indicates the update status of the QoS configuration on the side of the first core network device, and does not indicate the update status of the QoS configuration on the side of the access network device.

When receiving the information X6, the terminal device performs S812:
S812: Optionally, the terminal device stops sending the information X1 to the access network device, to save communication resources.

For the terminal device, in a possible implementation, when the terminal device receives the information X6, the terminal device updates the configuration of the QoS flow to the target QoS configuration, or the terminal device updates the configuration of the QoS flow based on the target QoS configuration.

In this way, the QoS configuration update triggered by the terminal device succeeds.

That is, when the terminal device determines that the service feature is updated, the terminal device determines the target QoS configuration, and notifies, in a form of an associated data packet, the access network device to update the QoS configuration, to dynamically update the QoS configuration and ensure a dynamic network requirement of the service.

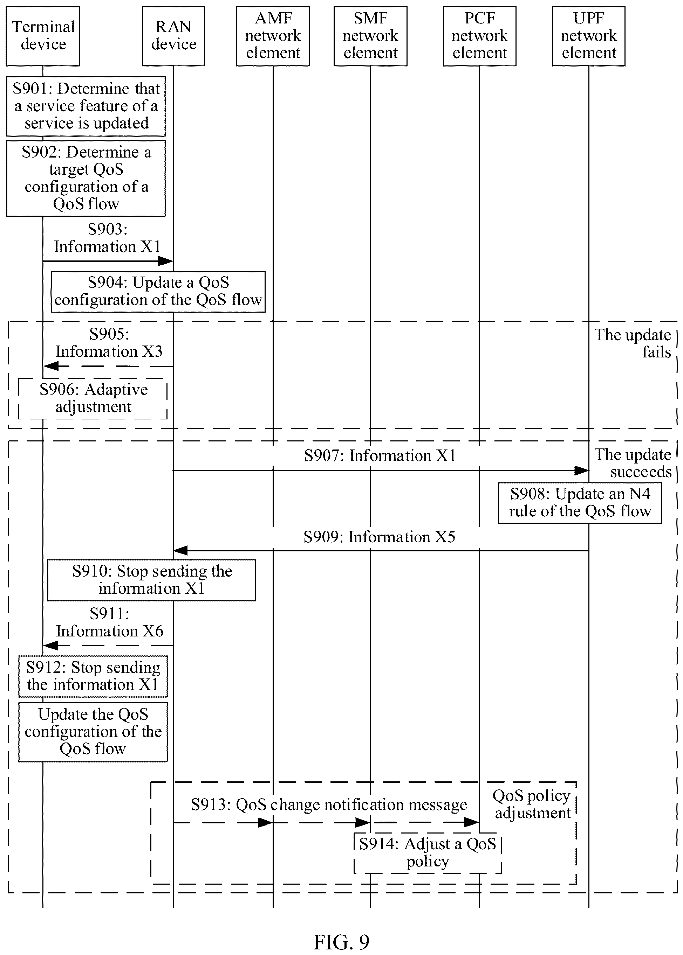

With reference to an example shown in FIG. 9, the following describes in detail specific implementation of the communication method shown in FIG. 8.

FIG. 9 is a schematic flowchart of a communication method according to an embodiment of this application. The first core network device in FIG. 8 may be a UPF network element shown in FIG. 9, the second core network device in FIG. 8 may be an SMF network element shown in FIG. 9, the third core network device in FIG. 8 may be a PCF network element shown in FIG. 9, and the access network device in FIG. 8 may be a RAN device shown in FIG. 9.

Specifically, in FIG. 9, the communication method in this embodiment of this application includes the following steps.

S901: A terminal device determines that a service feature of a service is updated.

S902: The terminal device determines a target QoS configuration of a QoS flow. This step is optional. To be specific, the terminal device may send information X1 to the RAN device. The information X1 represents an updated service feature of the service, which may be, for example, an end of a frame, a size of a data burst volume, duration of the data burst volume, and/or time of arrival of the data burst volume.

S903: The terminal device sends the information X1 to the RAN device. Correspondingly, the RAN device receives the information X1 from the terminal device.

S904: The RAN device updates a QoS configuration of the QoS flow. For example, the RAN device determines, based on a service feature indicated by the information X1, to update the QoS configuration of the QoS flow, for example, a size of a maximum data burst volume MDBV. It may also be understood as that the access network device performs dynamic resource adjustment or efficient resource scheduling based on the information X1 on a side of the terminal device. For example, if the access network device learns of the change in the traffic feature of the service (for example, information such as a data volume, duration, expected time of arrival, a periodicity, and a start or an end that are of burst traffic), the access network device may flexibly schedule network resources to ensure transmission of the service. In addition, the access network device can allocate a resource to another service or another user for usage, to further improve resource utilization. For another example, if the access network device determines, based on the change in the traffic feature of the service, that no data arrives within a future period of time, the access network device allocates a radio resource to another service or another user for usage, to improve resource utilization.

S905: The RAN device sends information X3 to the terminal device. Correspondingly, the terminal device receives the information X3 from the RAN device.

S906: The terminal device performs adaptive adjustment.

S907: Optionally, the RAN device sends the information X1 to the UPF network element. Correspondingly, the UPF network element receives the information X1 from the RAN device.

S908: The UPF network element updates an N4 rule of the QoS flow.

S909: Optionally, the UPF network element sends information X5 to the RAN device. Correspondingly, the RAN device receives the information X5 from the UPF network element.

S910: Optionally, the RAN device stops sending the information X1 to the UPF network element, to save communication resources.

S911: Optionally, the RAN device sends information X6 to the terminal device. Correspondingly, the terminal device receives the information X6 from the RAN device.

S912: Optionally, the terminal device stops sending the information X1 to the RAN device.

For S901 to S912, refer to the descriptions of S801 to S812. Details are not described again.

In this way, the QoS configuration update triggered by the terminal device succeeds.

In some embodiments, for the RAN device, when determining that the QoS configuration is successfully updated, the RAN device further performs S913:
S913: Optionally, the RAN device sends a QoS change notification (QoS Notification Control) message.

The QoS notification control message indicates that the QoS configuration has been updated, and indicate an updated target QoS configuration.

For example, the RAN device sends the QoS notification control message to the SMF network element via an AMF network element. Correspondingly, the SMF network element receives the QoS notification control message from the RAN device via the AMF network element.

Optionally, the QoS notification control message includes at least one of a target index and a target parameter. For the target index and the target parameter, refer to the descriptions of the information X5. Details are not described again.

Optionally, the QoS notification control message includes information X2, to indicate, to the SMF network element (and/or the PCF network element), a time period in which the target QoS configuration is valid.

For the SMF network element, when the SMF network element receives the QoS notification control message, the SMF network element sends the QoS notification control message to the PCF network element. Correspondingly, the PCF network element receives the QoS notification control message from the SMF network element.

When receiving the QoS notification control message, the SMF network element and the PCF network element perform S914:
S914: The SMF network element and the PCF network element adjust a QoS policy based on the QoS notification control message.

In this way, the SMF network element and the PCF network element can determine a currently valid target QoS configuration, and perform corresponding adjustments. For example, a charging policy may be adjusted based on the target QoS configuration.

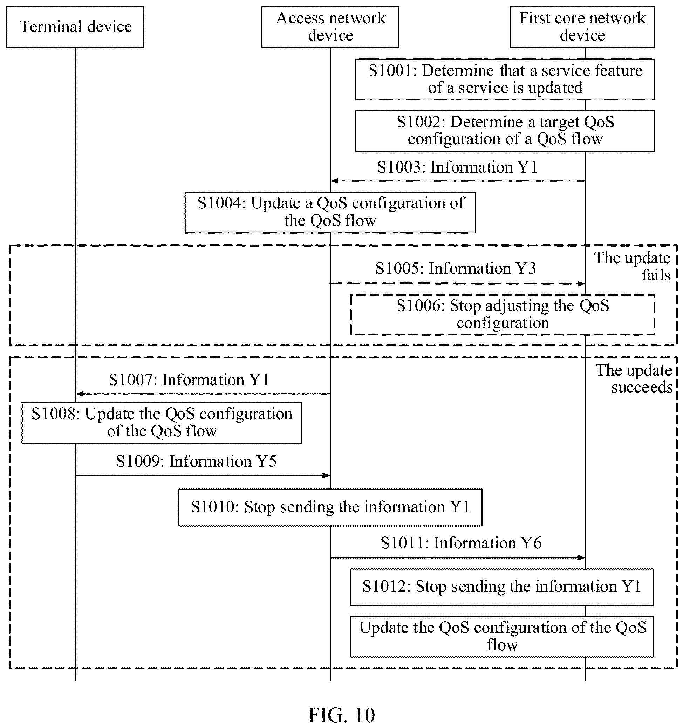

As shown in FIG. 10, that a first core network device triggers a QoS configuration update is used as an example. A communication method provided in an embodiment of this application includes the following operations.

S1001: The first core network device determines that a service feature of a service is updated.

For example, the first core network device is described as follows:
In this embodiment of this application, the first core network device is a user plane network element. In an example of a 5G communication system, the first core network device may be a UPF network element.

For example, when a trigger condition a1 is met, the first core network device determines that the service feature of the service is updated (that is, a service requirement changes).

The trigger condition a1 includes at least one of the following conditions.

Trigger condition a1-1: A difference between a data volume y1 and a data volume y2 is greater than a threshold y. The data volume y1 is a data volume of the service transmitted in a time unit y1, and the data volume y2 is a data volume of the service transmitted in a time unit y2. That is, a traffic feature of the service changes.

In this embodiment of this application, the data volume y1 and the data volume y2 are data volumes of a same service, and service data of the service is transmitted over a same QoS flow.

Trigger condition a1-2: A notification message y is obtained. The notification message y indicates a network requirement of the service or the service feature of the service. For example, the notification message y indicates a size of a media frame, and the media frame includes data of the service. The notification message y is a notification message carried in a data packet received by the first core network device. When an application server needs to receive or send a large quantity of media frames, the notification message y indicates the network requirement of the service, so that the first core network device learns that a network requirement of the service is updated. Specifically, the notification message y may be in a protocol header or an extension header field of the data packet, for example, IP/TCP/UDP/QUIC/RTP. For example, the notification message y is in an RTP protocol extension header of a downlink data packet, and the notification message y represents a current media frame, a size of a data burst volume, a periodicity of burst data, a start or an end of the burst data, duration corresponding to the service feature, time of arrival corresponding to the burst data, or the like.

Trigger condition a1-3: A QoS configuration of the QoS flow expires. The QoS flow is used for transmission of the service. The QoS configuration of the QoS flow has a valid time period. For example, a valid time period of a QoS configuration 1 is denoted as a time period 1, and a valid time period of a QoS configuration 2 is denoted as a time period 2. When the time period 1 expires, it means that the service feature of the service is updated, that is, the service feature is updated from a service feature 1 to a service feature 2. Correspondingly, the first core network device needs to update the QoS configuration, for example, update the QoS configuration from the QoS configuration 1 to the QoS configuration 2.

It should be understood that the trigger condition a1 may be configured by a second core network device. For details, refer to the descriptions of the N4 rule. Details are not described again. Alternatively, the trigger condition a1 may be pre-configured. This is not limited in this embodiment of this application.

That is, compared with S701, a difference lies in that S1001 is performed by the first core network device.

When determining that the service feature of the service is updated, the first core network device performs S1002 and S1003.

S1002: Optionally, the first core network device determines a target QoS configuration of the QoS flow.

This step is optional. To be specific, after determining that the service feature changes, the first core network device does not perform S1002, but performs S1003.

For example, the first core network device determines the target QoS configuration of the QoS flow based on the updated service feature or the updated service requirement. The target QoS configuration is a configuration indicated by a target QoS parameter set.

For example, when the N4 rule includes at least two groups of QoS parameter sets, the first core network device selects, based on the updated service feature, one group of QoS parameter sets from the at least two groups of QoS parameter sets as the target QoS parameter set. Correspondingly, the first core network device updates the QoS configuration of the QoS flow based on the target QoS parameter set. In a possible alternative description, the first core network device determines the target QoS configuration in at least two QoS configurations based on the updated service feature.

Optionally, when the N4 rule includes the at least two groups of QoS parameter sets, each group of QoS parameter sets has one index. Correspondingly, the first core network device can also determine an index (index) of the target QoS parameter set, and the index is denoted as a target index. That the target index identifies the target QoS configuration may be understood as that the target index is used to determine the target QoS configuration.

For another example, when the N4 rule includes one group of QoS parameter sets (for example, the foregoing basic QoS parameter set), the first core network device determines a first QoS parameter (for example, determines a value of the first QoS parameter) in the QoS parameter set based on the updated service feature. When the value of the first QoS parameter is determined, the foregoing QoS configuration indicated by the QoS parameter set is the target QoS configuration. In a possible alternative description, the first core network device determines the first QoS parameter in the QoS configuration of the QoS flow based on the updated service feature, to determine the target QoS configuration.

Optionally, when the N4 rule includes one group of QoS parameter sets (for example, the foregoing basic QoS parameter set), the first core network device determines a target parameter (value) based on a value before the first QoS parameter is adjusted, a value after the first QoS parameter is adjusted, and a step. In this embodiment of this application, the target parameter is used to determine the target QoS configuration.

Optionally, if there are multiple first QoS parameters, that is, there may be multiple adjustable QoS parameters, the target parameter includes the first QoS parameter and a quantity of adjustment steps, that is, bandwidth and 10.

For still another example, when the N4 rule includes one group of QoS parameter sets (for example, the foregoing basic QoS parameter set, which includes an adjustment range of the first QoS parameter), the first core network device determines the first QoS parameter (for example, determines the value of the first QoS parameter) within the adjustment range of the first QoS parameter based on the updated service feature. When the value of the first QoS parameter is determined, the foregoing QoS configuration indicated by the QoS parameter set is the target QoS configuration. In a possible alternative description, the first core network device determines the first QoS parameter in the QoS configuration of the QoS flow based on the updated service feature, to determine the target QoS configuration. For example, the first QoS parameter is the bandwidth, and the adjustment range of the first QoS parameter is from 10 MHz to 50 MHz. If the value after the first QoS parameter is adjusted is 30 MHz, the value of the target parameter is 30.

Optionally, if there are multiple first QoS parameters, that is, there are multiple adjustable QoS parameters, correspondingly, there are multiple adjustment ranges. For example, there are two first QoS parameters, which are respectively denoted as a QoS parameter 1 and a QoS parameter 2. An adjustment range of the QoS parameter 1 is denoted as an adjustment range 1, and an adjustment range of the QoS parameter 2 is denoted as an adjustment range 2. In this case, the target parameter includes the first QoS parameter and a target value after adjustment, for example, bandwidth and 30.

In this embodiment of this application, the target parameter is used to determine the target QoS configuration.

S1002 may alternatively be replaced with the following description:
Alternative description 1: When the service feature of the service is updated, the first core network device determines the target QoS configuration of the QoS flow based on the updated service feature or the service requirement, that is, determines the N4 rule corresponding to the QoS flow.

That is, compared with S802, a difference lies in that S1002 is performed by the first core network device.

S1003: The first core network device sends information Y1 to an access network device. Correspondingly, the access network device receives the information Y1 from the first core network device.

The information Y1 indicates the target QoS configuration of the QoS flow.

For example, the information Y1 may include the following information:
For example, the information Y1 includes the target index. For the target index, refer to the descriptions of S1002. Details are not described again.

For another example, the information Y1 includes the target parameter. For the target parameter, refer to the descriptions of S1002. Details are not described again.

For still another example, the information Y1 includes information about the target QoS configuration. For example, the information Y1 includes one or more of the following: a value of a PDB, a value of a PER, or a value of the bandwidth.

For still another example, the information Y1 includes a target network requirement of the service or the updated service feature, such as a size of media frame data, the size of the data burst volume, the time of arrival of the data burst volume, and/or transmission duration of the data burst volume.

For example, the information Y1 may be carried in the following information:
For example, the information Y1 is carried at a GTP-U layer of a downlink data packet. That is, S1003 may alternatively be described as: The first core network device sends the downlink data packet to the access network device. Correspondingly, the access network device receives the downlink data packet from the first core network device. The GTP-U layer of the downlink data packet includes the information Y1.

It should be understood that the information Y1 may alternatively be carried in another message. This is not limited in embodiments of this application.

It may be understood that, optionally, the first core network device may continuously send the information Y1 to the access network device until the first core network device receives feedback information from the access network device. Alternatively, the first core network device sends the information Y1 to the access network device in one or more consecutive data packets until the first core network device receives the feedback information from the access network device. For details, refer to descriptions of S1011 and S1012. Details are not described temporarily. In this embodiment of this application, the first core network device sends the information Y1 to the access network device in the one or more data packets, to ensure that the access network device can successfully receive the information Y1, to improve information transmission reliability and dynamically adjust the QoS configuration.

Optionally, the first core network device sends information Y2 to the access network device. Correspondingly, the access network device receives the information Y2 from the first core network device. The information Y2 indicates start time or a time period Y for updating the service feature, and the time period Y is a time period in which the target QoS configuration is valid. For the target QoS configuration, refer to the descriptions of S1002. Details are not described again.

For example, the information Y2 indicates a start moment and an end moment of the time period Y.

For another example, the information Y2 indicates the start moment and duration of the time period Y.

For still another example, the information Y2 indicates the end moment of the time period Y.

For still another example, the information Y2 indicates the duration of the time period Y.

For example, when the information Y2 indicates the end moment or the duration of the time period Y, the start moment of the time period Y may be a moment at which the access network device receives the information Y2. Alternatively, the start moment of the time period Y may be a moment at which the access network device updates the QoS configuration of the QoS flow to the target QoS configuration.

It should be understood that the information Y2 may be carried in a downlink data packet. The downlink data packet is a data packet sent by the first core network device to the access network device. In embodiments of this application, the information Y2 and the information Y1 may be carried in a same downlink data packet for transmission, or may be carried in different downlink data packets for transmission. This is not limited in embodiments of this application.

It should be understood that the time period Y may be determined by the first core network device.

Alternatively, the time period Y may be determined by a third core network device. For example, after determining the time period Y, the third core network device indicates the time period Y to the second core network device according to a PCC rule, and indicates the time period Y to the first core network device via the second core network device.

Alternatively, the time period Y may be determined by the second core network device. For example, after determining the time period Y, the second core network device indicates the time period Y to the first core network device.

In this embodiment of this application, a manner in which the first core network device obtains the time period Y is not limited.

That is, compared with S803, a difference lies in that S1003 is performed by the first core network device, and sent information is the information Y1.

When receiving the information Y1, the access network device performs S1004:
S1004: The access network device updates the QoS configuration of the QoS flow.

For the access network device, the information Y1 is used to determine a QoS profile corresponding to the target QoS configuration. For the information Y1, refer to the descriptions of S1003. Details are not described again. For example, when receiving the information Y1, the access network device determines the target QoS configuration of the QoS flow based on the information Y1, and updates the QoS configuration of the QoS flow based on the target QoS configuration.

For another example, when receiving the information Y1, the access network device updates a QoS profile of the QoS flow. The QoS profile indicates the QoS configuration. That the access network device updates the QoS profile of the QoS flow means that the access network device updates the QoS configuration of the QoS flow. For example, the information Y1 includes the target network requirement of the service, for example, the updated service feature of the service, which may be specifically the end of the frame, the size of the data burst volume, the duration of the data burst volume, and/or the time of arrival of the data burst volume. In this case, the access network device determines a size of a maximum data burst volume (max data burst volume, MDBV) based on such at least one burst service traffic feature.

For still another example, when receiving the information Y1, the access network device updates the QoS profile of the QoS flow. It may also be understood as that the access network device performs dynamic resource adjustment or efficient resource scheduling based on the information Y1 on a side of the first core network device. For example, if the access network device learns of the change in the traffic feature of the service (for example, information such as a data volume, duration, expected time of arrival, a periodicity, and a start or an end that are of burst traffic), the access network device may flexibly schedule a network resource to ensure transmission of the service. In addition, the access network device can allocate the network resource to another service or another user for usage, to further improve resource utilization.

For still another example, when receiving the information Y1, the access network device determines a target QoS profile of the QoS flow based on the information Y1, and updates the QoS configuration of the QoS flow based on the target QoS profile. The target QoS profile indicates the target QoS configuration.

Optionally, the access network device determines, based on the target QoS configuration, whether RRC reconfiguration needs to be performed. When the RRC reconfiguration needs to be performed, the access network device initiates an RRC reconfiguration procedure to the terminal device, to update the QoS configuration of the QoS flow to the target QoS configuration, or update a QoS configuration of a data radio bearer (data radio bearer, DRB) to the target QoS configuration.

That is, compared with S704, a difference lies in that S1004 is performed by the access network device, and reference information is the information Y1.

For the access network device, the QoS configuration update may succeed or fail. When the QoS configuration update fails, the access network device optionally performs S1005 and S1006. When the QoS configuration update succeeds, the access network device optionally performs S1007. Details are as follows.

S1005: Optionally, the access network device sends information Y3 to the first core network device. Correspondingly, the first core network device receives the information Y3 from the access network device.

The information Y3 indicates that the access network device fails to update the QoS configuration of the QoS flow. The access network device updates the QoS configuration of the QoS flow based on the information Y1.

For example, when a current network resource does not meet the target QoS configuration (namely, the target QoS configuration indicated by the information Y1), the access network device fails to update the QoS configuration of the QoS flow. The current network resource is an air interface resource between the access network device and the terminal device. That is, in this case, the access network device determines that the target QoS configuration cannot be met.

Optionally, the access network device sends information Y4 to the first core network device. Correspondingly, the first core network device receives the information Y4 from the access network device. The information Y4 indicates a QoS configuration supported by the access network device. For the information Y4, refer to the descriptions of the information X4. Details are not described again.

For example, the information Y4 is carried in an uplink data packet. That is, the access network device sends the uplink data packet to the first core network device. Correspondingly, the first core network device receives the uplink data packet from the access network device. A GTP-U layer of the uplink data packet includes the information Y4.

It should be understood that the information Y4 may alternatively be carried in another message. This is not limited in embodiments of this application.

That is, compared with S805, a difference of S1005 lies in that an information receive end is the first core network device, and transmitted information is the information Y3.

When receiving the information Y3, the first core network device performs S1006:
S1006: The first core network device stops adjusting the QoS configuration.

Optionally, when the first core network device receives the information Y4, the first core network device updates the QoS configuration of the QoS flow based on the information Y4. For example, the first core network device updates the QoS configuration to a QoS configuration indicated by the information Y4, to update the QoS configuration. Because the QoS configuration indicated by the information Y4 is closest to the target QoS configuration, when the first core network device updates the QoS configuration based on the information Y4, a dynamically changing service requirement can also be met as much as possible.

S1007: Optionally, the access network device sends the information Y1 to the terminal device. Correspondingly, the terminal device receives the information Y1 from the access network device.

The information Y1 indicates the target QoS configuration of the QoS flow.

For example, the information Y1 may include the target index, the target parameter, or the information about the target QoS configuration. For details, refer to the descriptions of S1003. Details are not described again.

Optionally, the access network device determines, based on the target QoS configuration, whether the information Y1 needs to be sent to the terminal device. For details, refer to the descriptions of S807. A difference lies in that a receive end herein is changed from the first core network device to the terminal device.

For example, the information Y1 may be carried in the following information:
For example, the information Y1 is carried at a PDCP layer of a downlink data packet. That is, S1007 may alternatively be described as: The access network device sends the downlink data packet to the terminal device. Correspondingly, the terminal device receives the downlink data packet from the access network device. The PDCP layer of the downlink data packet includes the information Y1.

For another example, the information Y1 is carried in RRC signaling. That is, S1007 may alternatively be described as: The access network device sends the RRC signaling to the terminal device. Correspondingly, the terminal device receives the RRC signaling from the access network device. The RRC signaling includes the information Y1.

For still another example, the information Y1 is carried in a MAC CE. That is, S1007 may alternatively be described as: The access network device sends the MAC CE to the terminal device. Correspondingly, the terminal device receives the MAC CE from the access network device. The MAC CE includes the information Y1.

It should be understood that the information Y1 may alternatively be carried in another message. This is not limited in embodiments of this application.

It may be understood that, the access network device may continuously send the information Y1 to the terminal device until the access network device receives feedback information from the terminal device. Alternatively, the access network device sends the information Y1 to the terminal device in one or more consecutive data packets until the access network device receives the feedback information from the terminal device. For details, refer to descriptions of S1009 and S1010. Details are not described temporarily. In this embodiment of this application, the access network device continuously sends the information Y1 to the terminal device, to help the terminal device successfully receive the information Y1, so that information transmission reliability is improved.

Optionally, the access network device determines, based on the target QoS configuration, whether the information Y1 needs to be sent to the terminal device. For details, refer to the descriptions of S807. Details are not described again.

That is, compared with S807, a difference of S1007 lies in that an information receive end is the terminal device, and transmitted information is the information Y1.

Optionally, when the access network device receives the information Y2, the access network device sends the information Y2 to the terminal device. Correspondingly, the terminal device receives the information Y2 from the access network device. The information Y2 and the information Y1 may be carried in a same message, or may be carried in different messages. This is not limited in embodiments of this application.

When receiving the information Y1, the terminal device performs S1008:
S1008: Optionally, the terminal device updates the QoS configuration of the QoS flow.

For the terminal device, the information Y1 is used to determine a QoS rule corresponding to the target QoS configuration. For the information Y1, refer to the descriptions of S1003. Details are not described again.

For example, when receiving the information Y1, the terminal device updates the QoS rule of the QoS flow. The QoS rule indicates the QoS configuration. That the terminal device updates the QoS rule of the QoS flow means that the terminal device updates the QoS configuration of the QoS flow.

That is, compared with S808, a difference lies in that S1008 is performed by the terminal device.

Optionally, for the terminal device, after updating the QoS configuration, the terminal device performs the following operation:
S1009: Optionally, the terminal device sends information Y5 to the access network device. Correspondingly, the access network device receives the information Y5 from the terminal device.

The information Y5 indicates that the terminal device successfully updates the QoS configuration of the QoS flow. The terminal device updates the QoS configuration of the QoS flow based on the information Y1.

For example, the information Y5 includes the following information:
For example, the information Y5 includes the target index and an ACK. For the target index, refer to the descriptions of S1002. Details are not described again. The ACK indicates that updating to the QoS configuration corresponding to the target index succeeds. The QoS configuration corresponding to the target index may be understood as the target QoS configuration determined by the terminal device based on the target index.

For another example, the information Y5 includes the target parameter and the ACK. For the target parameter, refer to the descriptions of S1002. Details are not described again. The ACK indicates that updating to the QoS configuration corresponding to the target parameter succeeds. The QoS configuration corresponding to the target parameter may be understood as the target QoS configuration determined by the terminal device based on the target parameter.

That is, compared with S809, a difference lies in that S1009 is performed by the terminal device, and transmitted information is the information Y5.

When receiving the information Y5, the access network device performs S1010 and/or S1011:

S1010: Optionally, the access network device stops sending the information Y1 to the terminal device, to save communication resources.

S1011: Optionally, the access network device sends information Y6 to the first core network device. Correspondingly, the first core network device receives the information Y6 from the access network device.

The information Y6 indicates that the terminal device and/or the access network device successfully update/updates the QoS configuration of the QoS flow. The terminal device updates the QoS configuration of the QoS flow based on the information Y1, and the access network device updates the QoS configuration of the QoS flow based on the information Y1.

For example, the information Y6 includes the following information:
For example, the information Y6 includes the target index and the ACK. Refer to the descriptions of the information Y5. Details are not described again.

For another example, the information Y6 includes the target parameter and the ACK. Refer to the descriptions of the information Y5. Details are not described again.

It is easy to understand that S1011 is described as follows:
Example 1: In this embodiment of this application, if the QoS configuration on a side of the access network device is successfully updated, and the QoS configuration on a side of the terminal device does not need to be updated, the access network device may perform S1011 after performing S1004. The information Y6 indicates that the access network device successfully updates the QoS configuration of the QoS flow.

Example 2: In this embodiment of this application, if the QoS configuration on the side of the access network device is successfully updated, and the QoS configuration on the side of the terminal device is also successfully updated, the access network device may perform S1011 after performing S1009. The information Y6 indicates that the terminal device and the access network device successfully update the QoS configuration of the QoS flow.

Example 3: In this embodiment of this application, S1011 includes S1011a. Optionally, S1011 further includes S1011b. Details are as follows:
If the QoS configuration on the side of the access network device is successfully updated (regardless of whether the QoS configuration on the side of the terminal device needs to be updated), the access network device may perform S1011a after performing S1004:
S1011a: The access network device sends the information Y6 to the first core network device. Correspondingly, the first core network device receives the information Y6 from the access network device.

The information Y6 indicates that the access network device successfully updates the QoS configuration of the QoS flow. It may be understood as that, in S1011a, the information Y6 indicates an update status of the QoS configuration on the side of the access network device, and does not indicate an update status of the QoS configuration on the side of the terminal device.

In Case 3, further, if the QoS configuration on the side of the terminal device does not need to be updated, S1011 includes S1011a, but does not include S1011b. On the contrary, if the QoS configuration on the side of the terminal device needs to be updated and the update succeeds, S1011 further includes S1011b:

S1011b: The access network device sends the information Y6 to the first core network device. Correspondingly, the first core network device receives the information Y6 from the access network device.

The information Y6 indicates that the terminal device successfully updates the QoS configuration of the QoS flow. It may be understood as that, in S1011b, the information Y6 indicates the update status of the QoS configuration on the side of the terminal device, and does not indicate the update status of the QoS configuration on the side of the access network device.

When receiving the information Y6, the first core network device performs S1012:
S1012: Optionally, the first core network device stops sending the information Y1 to the access network device, to save communication resources.

For the first core network device, in a possible implementation, when the first core network device receives the information Y6, the first core network device updates the configuration of the QoS flow to the target QoS configuration, or the first core network device updates the configuration of the QoS flow based on the target QoS configuration.

In this way, the QoS configuration update triggered by the first core network device succeeds.

That is, when the first core network device determines that the service feature is updated, the first core network device determines the target QoS configuration, and notifies, in a form of an associated data packet, the access network device to update the QoS configuration, to dynamically update the QoS configuration and ensure a dynamic network requirement of the service.

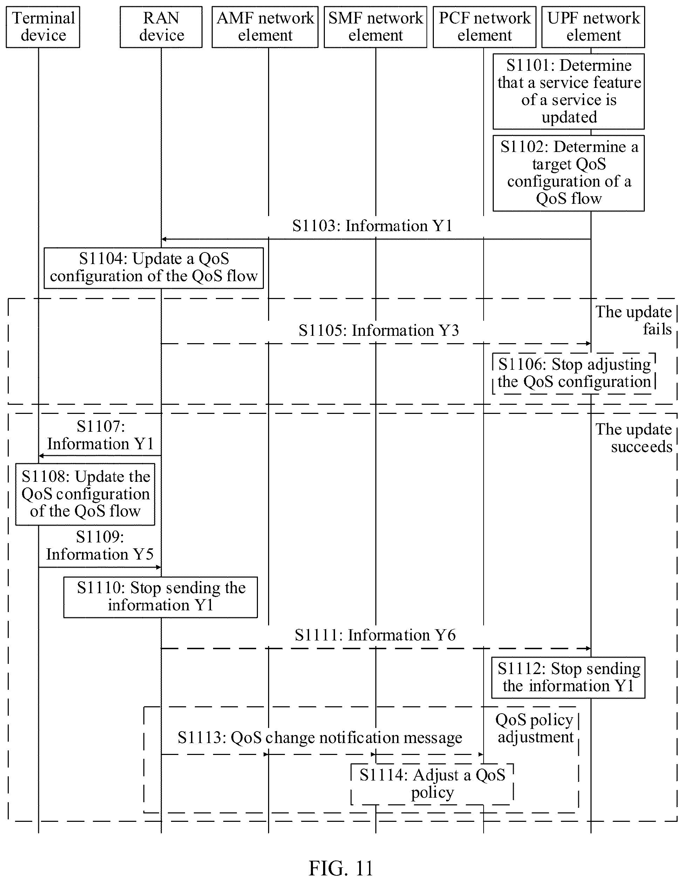

With reference to an example shown in FIG. 11, the following describes in detail specific implementation of the communication method shown in FIG. 10.

FIG. 11 is a schematic flowchart of a communication method according to an embodiment of this application. The first core network device in FIG. 10 may be a UPF network element shown in FIG. 11, the second core network device in FIG. 10 may be an SMF network element shown in FIG. 11, the third core network device in FIG. 10 may be a PCF network element shown in FIG. 11, and the access network device in FIG. 10 may be a RAN device shown in FIG. 11.

Specifically, in FIG. 11, the communication method in this embodiment of this application includes the following steps.

S1101: The UPF network element determines that a service feature of a service is updated.

S1102: The UPF network element determines a target QoS configuration of a QoS flow. This step is optional. To be specific, the UPF network element may send information Y1 to the RAN device. The information Y1 represents an updated service feature of the service, which may be, for example, a size of a media frame data, a size of a data burst volume, time of arrival of the data burst volume, and/or transmission duration of a data burst volume.

S1103: The UPF network element sends the information Y1 to the RAN device. Correspondingly, the RAN device receives the information Y1 from the UPF network element.

S1104: The RAN device updates a QoS configuration of the QoS flow. For example, the RAN device determines, based on a service feature indicated by the information Y1, to update the QoS configuration of the QoS flow, for example, a size of a maximum data burst volume MDBV. It may also be understood as that the access network device performs dynamic resource adjustment or efficient resource scheduling based on the information Y1 on a side of the first core network device. For example, if the access network device learns of the change in the traffic feature of the service (for example, information such as a data volume, duration, expected time of arrival, a periodicity, and a start or an end that are of burst traffic), the access network device may flexibly schedule a network resource to ensure transmission of the service. In addition, the access network device can allocate the network resource to another service or another user for usage, to further improve resource utilization. For another example, if the access network device determines, based on the change in the traffic feature of the service, that no data arrives within a future period of time, the access network device allocates a radio resource to another service or another user for usage, to improve resource utilization.

S1105: Optionally, the RAN device sends information Y3 to the first core network device. Correspondingly, the first core network device receives the information Y3 from the RAN device.

S1106: The first core network device stops adjusting the QoS configuration.

S1107: Optionally, the RAN device sends the information Y1 to the terminal device. Correspondingly, the terminal device receives the information Y1 from the RAN device.

S1108: Optionally, the terminal device updates the QoS configuration of the QoS flow.

S1109: Optionally, the terminal device sends information Y5 to the RAN device. Correspondingly, the RAN device receives the information Y5 from the terminal device.

S1110: Optionally, the RAN device stops sending the information Y1 to the terminal device, to save communication resources.

S1111: Optionally, the RAN device sends information Y6 to the UPF network element. Correspondingly, the UPF network element receives the information Y6 from the RAN device.

S1112: Optionally, the UPF network element stops sending the information Y1 to the RAN device, to save communication resources.

For S1101 to S1112, refer to the descriptions of S1001 to S1012. Details are not described again.

In some embodiments, for the RAN device, when determining that the QoS configuration is successfully updated, the RAN device further performs S1113:

S1113: The RAN device sends a QoS notification control message.

The QoS notification control message indicates that the QoS configuration has been updated, and indicate an updated target QoS configuration.

For example, for an implementation process of S1113, refer to the descriptions of S913. Details are not described again.

For the SMF network element, when the SMF network element receives the QoS notification control message, the SMF network element sends the QoS notification control message to the PCF network element. Correspondingly, the PCF network element receives the QoS notification control message from the SMF network element.

When receiving the QoS notification control message, the SMF network element and the PCF network element perform S1114:
S1114: The SMF network element and the PCF network element adjust a QoS policy based on the QoS notification control message.

For example, for an implementation process of S1114, refer to the descriptions of S914. Details are not described again.

In this way, the SMF network element and the PCF network element can determine a currently valid target QoS configuration, and perform corresponding adjustments. For example, a charging policy may be adjusted based on the target QoS configuration.

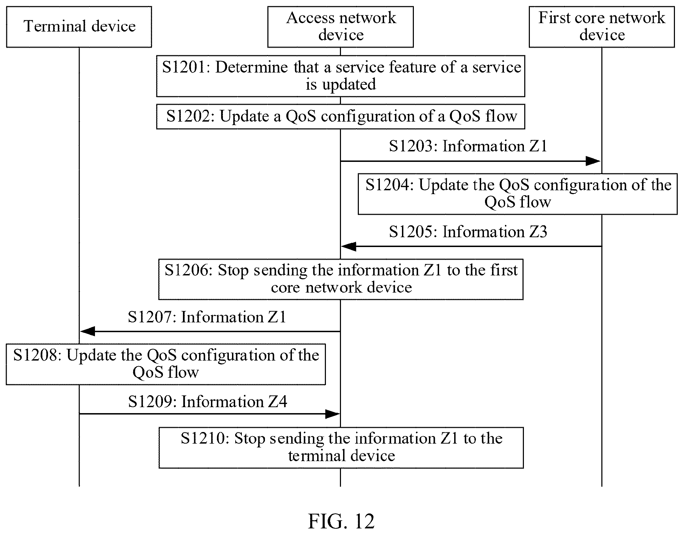

As shown in FIG. 12, that an access network device triggers a QoS configuration update is used as an example. A communication method provided in an embodiment of this application includes the following operations.

S1201: The access network device determines that a service feature of a service is updated.

For example, when a trigger condition b1 is met, the access network device determines that the service feature of the service is updated.

The trigger condition b1 includes at least one of the following conditions.

Trigger condition b1-1: A difference between a data volume z1 and a data volume z2 is greater than a threshold z. The data volume z1 is a data volume of the service transmitted in a time unit z1, and the data volume z2 is a data volume of the service transmitted in a time unit z2. That is, a traffic feature of the service changes.

In this embodiment of this application, the data volume z1 and the data volume z2 are data volumes of a same service, and service data of the service is transmitted over a same QoS flow.

Trigger condition b1-2: A QoS configuration of the QoS flow expires. The QoS flow is used for transmission of the service. The QoS configuration of the QoS flow has a valid time period. For example, a valid time period of a QoS configuration 1 is denoted as a time period 1, and a valid time period of a QoS configuration 2 is denoted as a time period 2. When the time period 1 expires, it means that the service feature of the service is updated, that is, the service feature is updated from a service feature 1 to a service feature 2. Correspondingly, the access network device needs to update the QoS configuration, for example, update the QoS configuration from the QoS configuration 1 to the QoS configuration 2.

Trigger condition b1-3: A notification message z is obtained. The notification message z indicates a network requirement of the service. For example, the notification message z indicates a size of a media frame, and the media frame includes data of the service. The notification message z is a notification message carried in a data packet received by the access network device. When an application server needs to receive or send a large quantity of media frames, the notification message z indicates the network requirement of the service, so that the access network device learns that a network requirement of the service is updated. Specifically, the notification message z may be in a protocol header or an extension header field of the data packet, for example, IP/TCP/UDP/QUIC/RTP. For example, the notification message z is in an RTP protocol extension header or a downlink GTP-U layer header of a downlink data packet, and the notification message z represents a size, start time, duration, a network requirement, a periodicity, a start or an end, and the like of a current media frame or a data burst volume.

It should be understood that the trigger condition b1 may be configured by an SMF. For details, refer to the descriptions of the QoS profile. Details are not described again. Alternatively, the trigger condition b1 may be pre-configured. This is not limited in this embodiment of this application.

That is, compared with S801 and S1001, a difference lies in that S1201 is performed by the access network device.

When determining that the service feature of the service is updated, the access network device performs S 1202, S1203, or S 1207. Specific descriptions are as follows.

In one aspect, the access network device updates the QoS configuration. For details, refer to descriptions of S 1202.

S1202: The access network device updates the QoS configuration of the QoS flow.

For example, the access network device updates the QoS configuration of the QoS flow to a target QoS configuration. The target QoS configuration is a configuration indicated by a target QoS parameter set.

That the access network device updates the QoS configuration of the QoS flow may also be understood as that the access network device performs dynamic resource adjustment or efficient resource scheduling based on a dynamic change of the service feature. For example, if the access network device learns of the change in the traffic feature of the service (for example, information such as a data volume, duration, expected time of arrival, a periodicity, and a start or an end that are of burst traffic), the access network device may flexibly schedule network resources to ensure transmission of the service. In addition, the access network device can allocate a network resource to another service or another user for usage, to further improve resource utilization. For another example, if the access network device determines, based on the change in the traffic feature of the service, that no data arrives within a future period of time, the access network device allocates a radio resource to another service or another user for usage, to improve resource utilization.

For example, when the QoS profile includes at least two QoS parameter sets, the access network device selects, based on the updated service feature, one QoS parameter set from the at least two QoS parameter sets as the target QoS parameter set. Correspondingly, the access network device updates the QoS configuration of the QoS flow based on the target QoS parameter set. In a possible alternative description, the QoS profile indicates at least two QoS configurations. The access network device determines the target QoS configuration in the at least two QoS configurations based on the updated service feature.

Optionally, when the QoS profile includes the at least two groups of QoS parameter sets, each group of QoS parameter sets has one index. Correspondingly, the access network device can also determine an index of the target QoS parameter set, and the index is denoted as a target index. The target index identifies the target QoS configuration.

For another example, when the QoS profile includes one group of QoS parameter sets (for example, the foregoing basic QoS parameter set), the access network device determines a first QoS parameter (for example, determines a value of the first QoS parameter) in the QoS parameter set based on the updated service feature. When the value of the first QoS parameter is determined, the foregoing QoS configuration indicated by the QoS parameter set is the target QoS configuration. In a possible alternative description, the access network device determines the first QoS parameter in the QoS configuration of the QoS flow based on the updated service feature, to determine the target QoS configuration.

Optionally, when the QoS profile includes one group of QoS parameter sets (for example, the foregoing basic QoS parameter set), the access network device determines a target parameter (value) based on a value before the first QoS parameter is adjusted, a value after the first QoS parameter is adjusted, and a step. In this embodiment of this application, the target parameter is used to determine the target QoS configuration.

Optionally, if there are multiple first QoS parameters, that is, there may be multiple adjustable QoS parameters, the target parameter includes the first QoS parameter and a quantity of adjustment steps, that is, bandwidth and 10.

For still another example, when the QoS profile includes one group of QoS parameter sets (for example, the foregoing basic QoS parameter set, which includes an adjustment range of the first QoS parameter), the access network device determines the first QoS parameter (for example, determines the value of the first QoS parameter) within the adjustment range of the first QoS parameter based on the updated service feature. When the value of the first QoS parameter is determined, the foregoing QoS configuration indicated by the QoS parameter set is the target QoS configuration. In a possible alternative description, the access network device determines the first QoS parameter in the QoS configuration of the QoS flow based on the updated service feature, to determine the target QoS configuration. For example, the first QoS parameter is the bandwidth, and the adjustment range of the first QoS parameter is from 10 MHz to 50 MHz. If the value after the first QoS parameter is adjusted is 30 MHz, the value of the target parameter is 30.

Optionally, if there are multiple first QoS parameters, that is, there are multiple adjustable QoS parameters, correspondingly, there are multiple adjustment ranges. For example, there are two first QoS parameters, which are respectively denoted as a QoS parameter 1 and a QoS parameter 2. An adjustment range of the QoS parameter 1 is denoted as an adjustment range 1, and an adjustment range of the QoS parameter 2 is denoted as an adjustment range 2. In this case, the target parameter includes the first QoS parameter and a target value after adjustment, for example, the bandwidth and 30.

In this embodiment of this application, the target parameter is used to determine the target QoS configuration.

Optionally, the access network device determines, based on the target QoS configuration, whether RRC reconfiguration needs to be performed. When the RRC reconfiguration needs to be performed, the access network device initiates an RRC reconfiguration procedure to a terminal device, to update the QoS configuration of the QoS flow to the target QoS configuration, or update a QoS configuration of a data radio bearer (data radio bearer, DRB) to the target QoS configuration.

S1202 may alternatively be replaced with the following description:
When the service feature of the service is updated, the access network device determines the target QoS configuration of the QoS flow based on the updated service feature, and updates the QoS configuration of the QoS flow based on the target QoS configuration.

That is, compared with S802 and S1002, a difference lies in that S1202 is performed by the access network device.

In another aspect, the access network device indicates the first core network device to update the QoS configuration. For details, refer to descriptions of S1203.

S1203: Optionally, the access network device sends information Z1 to the first core network device. Correspondingly, the first core network device receives the information Z1 from the access network device.

The information Z1 indicates the target QoS configuration of the QoS flow.

For example, the information Z1 may include the following information:

For example, the information Z1 includes the target index. For the target index, refer to the descriptions of S1202. Details are not described again.

For another example, the information Z1 includes the target parameter. For the target parameter, refer to the descriptions of S1202. Details are not described again.

For still another example, the information Z1 includes information about the target QoS configuration. For example, the information Z1 includes one or more of the following: a value of a PDB, a value of a PER, or a value of the bandwidth.

For still another example, the information Z1 includes a target network requirement of the service.

For example, the information Z1 may be carried in the following information:

For example, the information Z1 is carried at a GTP-U layer of an uplink data packet. That is, S1203 may alternatively be described as: The access network device sends the uplink data packet to the first core network device. Correspondingly, the first core network device receives the uplink data packet from the access network device. The GTP-U layer of the uplink data packet includes the information Z1. Specifically, the access network device may transmit the corresponding information Z1 in one or more uplink data packets.

It should be understood that the information Z1 may alternatively be carried in another message. This is not limited in embodiments of this application.

It may be understood that, the access network device may continuously send the information Z1 to the first core network device until the access network device receives feedback information from the first core network device. Alternatively, the access network device sends the information Z1 to the first core network device in the one or more data packets. For details, refer to descriptions of S 1205 and S1206. Details are not described temporarily. In this embodiment of this application, the access network device continuously sends the information Z1 to the first core network device, to ensure that the first core network device successfully receives the information Z1, to improve information transmission reliability and dynamically adjust the QoS configuration of the service.

Optionally, the access network device determines, based on the target QoS configuration, whether the information Y1 needs to be sent to the first core network device. For details, refer to the descriptions of S807. Details are not described again.

Optionally, the access network device sends information Z2 to the first core network device. Correspondingly, the first core network device receives the information Z2 from the access network device. The information Z2 indicates a time period Z, and the time period Z is a time period in which the target QoS configuration is valid. For the target QoS configuration, refer to the descriptions of S 1202. Details are not described again.

For example, the information Z2 indicates a start moment and an end moment of the time period Z.

For another example, the information Z2 indicates the start moment and duration of the time period Z.

For still another example, the information Z2 indicates the end moment of the time period Z.

For still another example, the information Z2 indicates the duration of the time period Z.

For example, when the information Z2 indicates the end moment or the duration of the time period Z, the start moment of the time period Z may be a moment at which the first core network device receives the information Z2. Alternatively, the start moment of the time period Z may be a moment at which the first core network device updates the QoS configuration of the QoS flow to the target QoS configuration.

It should be understood that the information Z2 may be carried in one or more uplink data packets. The one or more uplink data packets are data packets sent by the access network device to the first core network device. In this embodiment of this application, the information Z2 and the information Z1 may be carried in a same data packet for transmission, or may be carried in different messages for transmission. This is not limited in this embodiment of this application.

It should be understood that the time period Z may be determined by the access network device.

Alternatively, the time period Z may be determined by a third core network device. For example, after determining the time period Z, the third core network device indicates the time period Z to a second core network device according to a PCC rule, and indicates the time period Z to the access network device via the second core network device.

Alternatively, the time period Z may be determined by the second core network device. For example, after determining the time period Z, the second core network device indicates the time period Z to the access network device.

In this embodiment of this application, a manner in which the access network device obtains the time period Z is not limited.

That is, compared with S803 and S1003, a difference of S1203 lies in that an information transmit end is the access network device, an information receive end is the first core network device, and transmitted information is the information Z1.

When the first core network device receives the information Z1, the first core network device performs S1204:
S1204: The first core network device updates the QoS configuration of the QoS flow.

For the first core network device, the information Z1 is used to determine an N4 rule corresponding to the target QoS configuration. For the information Z1, refer to the descriptions of S1203. Details are not described again.

For example, when receiving the information Z1, the first core network device determines the target QoS configuration of the QoS flow based on the information Z1, and updates the QoS configuration of the QoS flow based on the target QoS configuration, that is, the first core network device updates an N4 rule of the QoS configurationto the N4 rule corresponding to the target QoS configuration.

For another example, when receiving the information Z1, the first core network device determines a target N4 rule of the QoS flow based on the information Z1, and updates the QoS configuration of the QoS flow according to the target N4 rule. The target N4 rule indicates the target QoS configuration.

That is, compared with S804 and S1004, a difference lies in that S1204 is performed by the first core network device, and reference information is the information Z1.

Optionally, for the first core network device, after updating the QoS configuration, the first core network device performs the following operation:
S1205: Optionally, the first core network device sends information Z3 to the access network device. Correspondingly, the access network device receives the information Z3 from the first core network device.

The information Z3 indicates that the first core network device successfully updates the QoS configuration of the QoS flow. The first core network device updates the QoS configuration of the QoS flow based on the information Z1.

For example, the information Z3 includes the following information:
For example, the information Z3 includes the target index and an ACK. For the target index, refer to the descriptions of S1202. Details are not described again. The ACK indicates that updating to the QoS configuration corresponding to the target index succeeds. The QoS configuration corresponding to the target index may be understood as the target QoS configuration determined by the first core network device based on the target index.

For another example, the information Z3 includes the target parameter and the ACK. For the target parameter, refer to the descriptions of S1202. Details are not described again. The ACK indicates that updating to the QoS configuration corresponding to the target parameter succeeds. The QoS configuration corresponding to the target parameter may be understood as the target QoS configuration determined by the first core network device based on the target parameter.

When receiving the information Z3, the access network device performs S1206:
S1206: Optionally, the access network device stops sending the information Z1 to the first core network device, to save communication resources.

In still another aspect, the access network device indicates the terminal device to update the QoS configuration. For details, refer to descriptions of S1207.

S1207: Optionally, the access network device sends the information Z1 to the terminal device. Correspondingly, the terminal device receives the information Z1 from the access network device.

The information Z1 indicates the target QoS configuration of the QoS flow.

For example, the information Z1 may include the target index, the target parameter, or the information about the target QoS configuration. For details, refer to the descriptions of S1203. Details are not described again.

For example, the information Z1 may be carried in the following information:
For example, the information Z1 is carried at a PDCP layer of one or more downlink data packets. That is, S1207 may alternatively be described as: The access network device sends the one or more data packets to the terminal device. Correspondingly, the terminal device receives the one or more data packets from the access network device. The PDCP layer of the one or more data packets includes the information Z1.

For another example, the information Z1 is carried in RRC signaling. That is, S1207 may alternatively be described as: The access network device sends the RRC signaling to the terminal device. Correspondingly, the terminal device receives the RRC signaling from the access network device. The RRC signaling includes the information Z1.

For still another example, the information Z1 is carried in a MAC CE. That is, S1207 may alternatively be described as: The access network device sends the MAC CE to the terminal device. Correspondingly, the terminal device receives the MAC CE from the access network device. The MAC CE includes the information Z1.

It should be understood that the information Z1 may alternatively be carried in another message. This is not limited in embodiments of this application.

It may be understood that, the access network device may continuously send the information Z1 to the terminal device until the access network device receives feedback information from the terminal device. Alternatively, the access network device sends the information Z1 to the terminal device in the one or more data packets until the access network device receives the feedback information from the terminal device. For details, refer to descriptions of S1209 and S1210. Details are not described temporarily. In this embodiment of this application, the access network device continuously sends the information Z1 to the terminal device, to help the terminal device successfully receive the information Z1, so that information transmission reliability is improved.

Optionally, the access network device determines, based on the target QoS configuration, whether the information Z1 needs to be sent to the terminal device. For details, refer to the descriptions of S807. Details are not described again.

Optionally, the access network device sends information Z2 to the terminal device. Correspondingly, the terminal device receives the information Z2 from the access network device. The information Z2 indicates the time period Z, and the time period Z is a time period in which the target QoS configuration is valid. For the information Z2, refer to the descriptions of S1203. Details are not described again.

It should be understood that the information Z2 may be carried in a downlink data packet. The downlink data packet is a data packet sent by the access network device to the terminal device. In embodiments of this application, the information Z2 and the information Z1 may be carried in a same data packet for transmission, or may be carried in different data packets for transmission. This is not limited in embodiments of this application.

When the terminal device receives the information Z1, the terminal device performs S1208:
S1208: Optionally, the terminal device updates the QoS configuration of the QoS flow.

For the terminal device, the information Z1 is used to determine a QoS rule corresponding to the target QoS configuration. For the information Z1, refer to the descriptions of S1207. Details are not described again.

For example, when receiving the information Z1, the terminal device updates the QoS rule of the QoS flow. The QoS rule indicates the QoS configuration. That the terminal device updates the QoS rule of the QoS flow means that the terminal device updates the QoS configuration of the QoS flow.

Optionally, for the terminal device, after updating the QoS configuration, the terminal device performs the following operation:
S1209: Optionally, the terminal device sends information Z4 to the access network device. Correspondingly, the access network device receives the information Z4 from the terminal device.

The information Z4 indicates that the terminal device successfully updates the QoS configuration of the QoS flow. The terminal device updates the QoS configuration of the QoS flow based on the information Z1.

For example, the information Z4 includes the following information:
For example, the information Z4 includes the target index and an ACK. For the target index, refer to the descriptions of S1202. Details are not described again. The ACK indicates that updating to the QoS configuration corresponding to the target index succeeds. The QoS configuration corresponding to the target index may be understood as the target QoS configuration determined by the terminal device based on the target index.

For another example, the information Z4 includes the target parameter and the ACK. For the target parameter, refer to the descriptions of S1202. Details are not described again. The ACK indicates that updating to the QoS configuration corresponding to the target parameter succeeds. The QoS configuration corresponding to the target parameter may be understood as the target QoS configuration determined by the terminal device based on the target parameter.

When receiving the information Z4, the access network device performs S1210:
S1210: Optionally, the access network device stops sending the information Z1 to the terminal device, to save communication resources.

In this way, the QoS configuration update triggered by the access network device succeeds.

That is, when the access network device determines that the service feature is updated, the access network device determines the target QoS configuration, and notifies, in a form of an associated data packet, the terminal device and/or the first core network device to update the QoS configuration, to dynamically update the QoS configuration and ensure a dynamic network requirement of the service.

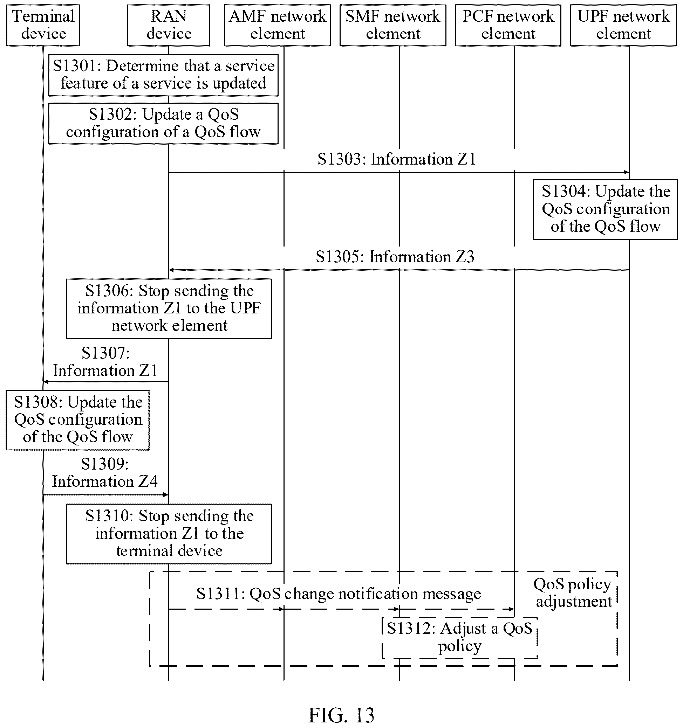

With reference to an example shown in FIG. 13, the following describes in detail specific implementation of the communication method shown in FIG. 12.

FIG. 13 is a schematic flowchart 4 of a communication method according to an embodiment of this application. The first core network device in FIG. 12 may be a UPF network element shown in FIG. 13, the second core network device in FIG. 12 may be an SMF network element shown in FIG. 13, the third core network device in FIG. 12 may be a PCF network element shown in FIG. 13, and the access network device in FIG. 12 may be a RAN device shown in FIG. 13.

Specifically, in FIG. 13, the communication method in this embodiment of this application includes the following steps.

S1301: The RAN device determines that a service feature of a service is updated.

S1302: The RAN device updates a QoS configuration of a QoS flow.

S1303: Optionally, the RAN device sends information Z1 to the UPF network element. Correspondingly, the UPF network element receives the information Z1 from the RAN device.

S1304: The UPF network element updates the QoS configuration of the QoS flow.

S1305: Optionally, the UPF network element sends information Z3 to the RAN device. Correspondingly, the RAN device receives the information Z3 from the UPF network element.

S1306: Optionally, the RAN device stops sending the information Z1 to the UPF network element, to save communication resources.

S1307: The RAN device sends the information Z1 to a terminal device. Correspondingly, the terminal device receives the information Z1 from the RAN device.

S1308: The terminal device updates the QoS configuration of the QoS flow.

S1309: Optionally, the terminal device sends information Z4 to the RAN device. Correspondingly, the RAN device receives the information Z4 from the terminal device.

S1310: Optionally, the RAN device stops sending the information Z1 to the terminal device, to save communication resources.

For S1301 to S1310, refer to the descriptions of S1201 to S1210. Details are not described again.

In some embodiments, for the RAN device, when determining that the QoS configuration is successfully updated, the RAN device further performs S1311:
S1311: The RAN device sends a QoS notification control message.

The QoS notification control message indicates that the QoS configuration has been updated, and indicate an updated target QoS configuration.

For example, for an implementation process of S1311, refer to the descriptions of S913. Details are not described again.

For the SMF network element, when the SMF network element receives the QoS notification control message, the SMF network element sends the QoS notification control message to the PCF network element. Correspondingly, the PCF network element receives the QoS notification control message from the SMF network element.

When receiving the QoS notification control message, the SMF network element and the PCF network element perform S1312:

S1312: The SMF network element and the PCF network element adjust a QoS policy based on the QoS notification control message.

For example, for an implementation process of S1312, refer to the descriptions of S914. Details are not described again.

In this way, the SMF network element and the PCF network element can determine a currently valid target QoS configuration, and perform corresponding adjustments. For example, a charging policy may be adjusted based on the target QoS configuration.

It may be understood that, in this embodiment of this application, the QoS flow may be a GBR QoS flow, or may be a non-GBR QoS flow. In this embodiment of this application, the QoS flow is applicable to scenarios such as video surveillance, XR, cloud gaming, and cloud photographing. For details, refer to the explanations of the term. Details are not described again.

It may be understood that, in embodiments of this application, processing such as collection, storage, use, processing, transmission, provision, and disclosure of user personal information (for example, a location of a terminal device) complies with related laws and regulations, and does not violate public order and good morals. For example, the location of the terminal device is obtained with user authorization. This is uniformly described herein, and details are not described again.

It may be understood that, in the foregoing embodiments, the methods and/or steps implemented by the terminal device may alternatively be implemented by a part (for example, a processor, a chip, a chip system, a circuit, a logical module, or software) that can be used in the terminal device. The methods and/or steps implemented by the access network device may alternatively be implemented by a part (for example, a processor, a chip, a chip system, a circuit, a logical module, or software) that can be used in the access network device. The methods and/or steps implemented by the core network device (for example, the foregoing first core network device, the foregoing second core network device, or the foregoing third core network device) may alternatively be implemented by a part (for example, a processor, a chip, a chip system, a circuit, a logical module, or software) that can be used in the core network device.

The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the module division is an example, and is merely a logical function division. During actual implementation, another division manner may be used.

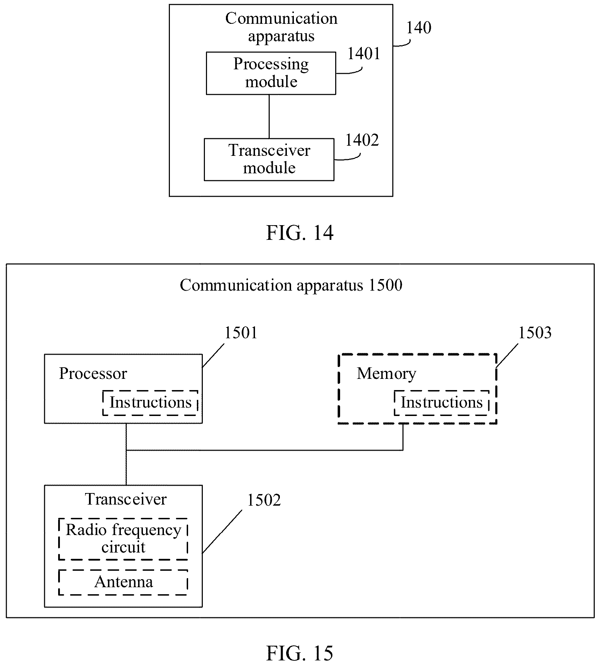

FIG. 14 is a diagram of a structure of a communication apparatus 140. The communication apparatus 140 includes a processing module 1401 and a transceiver module 1402. The communication apparatus 140 may be configured to implement functions of the foregoing terminal device, the foregoing access network device, the foregoing first core network device, the foregoing second core network device, or the foregoing third core network device.

In some embodiments, the communication apparatus 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, respectively configured to perform receiving and sending steps performed by the terminal device, the access network device, the first core network device, the second core network device, or the third core network device in the foregoing method embodiments, and/or configured to support another process of the technology described in this specification. The processing module 1401 may be configured to perform processing (for example, determining) steps performed by the terminal device, the access network device, the first core network device, the second core network device, or the third core network device in the foregoing method embodiments, and/or is configured to support another process of the technology described in this specification.

All related content of the steps in the foregoing method embodiments may be cited in function descriptions of the corresponding functional modules. Details are not described herein again.

Optionally, in this application, that the transceiver module receives/sends information may also be understood as that the processing module receives/sends the information via the transceiver module. That the processing module receives/sends the information via the transceiver module may also be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 140 may be presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the communication apparatus 140 in FIG. 14 is a chip or a chip system, a function/an implementation process of the transceiver module 1402 may be implemented through an input/output interface (or a communication interface) of the chip or the chip system, and a function/an implementation process of the processing module 1401 may be implemented by a processor (or a processing circuit) of the chip or the chip system.

Because the communication apparatus 140 provided in this embodiment may perform the foregoing methods, for technical effects that can be achieved by the communication apparatus 140, refer to the foregoing method embodiments. Details are not described herein again.

In a possible product form, the terminal device, the access network device, the first core network device, the second core network device, or the third core network device in embodiments of this application may alternatively be implemented by using the following: one or more field programmable gate arrays (field programmable gate arrays, FPGAs), a programmable logic device (programmable logic device, PLD), a controller, a state machine, gate logic, a discrete hardware part, any other suitable circuit, or any combination of circuits that can perform various functions described in this application.

In another possible product form, the terminal device, the access network device, the first core network device, the second core network device, or the third core network device in embodiments of this application may be implemented by a general bus architecture. For ease of description, FIG. 15 is a diagram of a structure of a communication apparatus 1500 according to an embodiment of this application. The communication apparatus 1500 includes a processor 1501 and a transceiver 1502. The communication apparatus 1500 may be a terminal device, or a chip or a chip system in the terminal device; or the communication apparatus 1500 may be an access network device, or a chip or a module in the access network device; or the communication apparatus 1500 may be a first core network device, or a chip or a module in the first core network device; or the communication apparatus 1500 may be a second core network device, or a chip or a module in the second core network device; or the communication apparatus 1500 may be a third core network device, or a chip or a module in the third core network device.

FIG. 15 shows only main parts of the communication apparatus 1500. In addition to the processor 1501 and the transceiver 1502, the communication apparatus 1500 may further include a memory 1503 and an input/output apparatus (not shown in the figure).

Optionally, the processor 1501 is mainly configured to: process a communication protocol and communication data, control the entire communication apparatus, execute a software program, and process data of the software program. The memory 1503 is mainly configured to store the software program and the data. The transceiver 1502 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process the data of the software program. When data needs to be sent wirelessly, the processor 1501 performs baseband processing on the to-be-sent data, and outputs a baseband signal to a radio frequency circuit. The radio frequency circuit performs radio frequency processing on the baseband signal, and sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1501. The processor 1501 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 140 may be in a form of the communication apparatus 1500 shown in FIG. 15.

In an example, the function/implementation process of the processing module 1401 in FIG. 14 may be implemented by the processor 1501 in the communication apparatus 1500 shown in FIG. 15 by invoking computer-executable instructions stored in the memory 1503. The function/implementation process of the transceiver module 1402 in FIG. 14 may be implemented by the transceiver 1502 in the communication apparatus 1500 shown in FIG. 15.

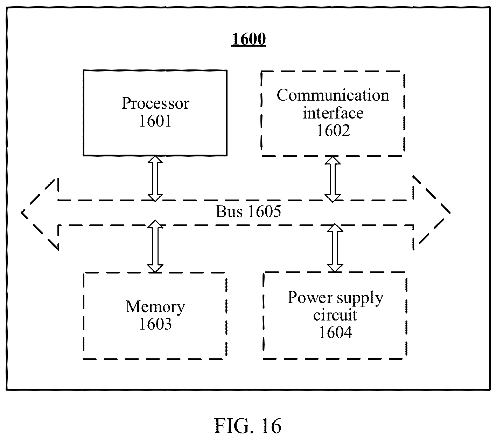

In still another possible product form, the terminal device, the access network device, the first core network device, the second core network device, or the third core network device in this application may use a composition structure shown in FIG. 16, or include parts shown in FIG. 16. FIG. 16 is a diagram of composition of a communication apparatus 1600 according to this application.

As shown in FIG. 16, the communication apparatus 1600 includes at least one processor 1601. Optionally, the communication apparatus further includes a communication interface 1602.

When related program instructions are executed in the at least one processor 1601, the apparatus 1600 may be caused to implement the method provided in any one of the foregoing embodiments and any possible design thereof. Alternatively, the processor 1601 is configured to implement, by using a logic circuit or executing code instructions, the method provided in any one of the foregoing embodiments and any possible design thereof.

The communication interface 1602 may be configured to: receive the program instructions, and transmit the program instructions to the processor. Alternatively, the communication interface 1602 may be used by the communication apparatus 1600 to communicate and interact with another communication device, for example, exchange control signaling and/or service data. For example, the communication interface 1602 may be configured to: receive a signal from an apparatus other than the communication apparatus 1600, and transmit the signal to the processor 1601, or send a signal from the processor 1601 to a communication apparatus other than the communication apparatus 1600.

Optionally, the communication interface 1602 may be a code and/or data read/write interface circuit, or the communication interface 1602 may be a signal transmission interface circuit between a communication processor and a transceiver machine, or may be a pin of a chip.

Optionally, the communication apparatus 1600 may further include at least one memory 1603. The memory 1603 may be configured to store the related program instructions and/or data that are/is needed. It should be noted that the memory 1603 may be independent of the processor 1601, or may be integrated with the processor 1601. The memory 1603 may be located inside the communication apparatus 1600, or may be located outside the communication apparatus 1600. This is not limited.

Optionally, the communication apparatus 1600 may further include a power supply circuit 1604. The power supply circuit 1604 may be configured to supply power to the processor 1601. The power supply circuit 1604 may be located in a same chip as the processor 1601, or may be located in another chip other than a chip in which the processor 1601 is located.

Optionally, the communication apparatus 1600 may further include a bus 1605, and parts of the communication apparatus 1600 may be interconnected through the bus 1605.

In some embodiments, in hardware implementation, a person skilled in the art may figure out that the communication apparatus 140 shown in FIG. 14 may be in a form of the communication apparatus 1600 shown in FIG. 16.

In an example, the function/implementation process of the processing module 1401 in FIG. 14 may be implemented by the processor 1601 in the communication apparatus 1600 shown in FIG. 16 by invoking computer-executable instructions stored in the memory 1603. The function/implementation process of the transceiver module 1402 in FIG. 14 may be implemented by the communication interface 1602 in the communication apparatus 1600 shown in FIG. 16.

It should be noted that the structure shown in FIG. 16 does not constitute a specific limitation on the terminal device, the access network device, the first core network device, the second core network device, or the third core network device. For example, in some other embodiments of this application, the terminal device, the access network device, the first core network device, the second core network device, or the third core network device may include more or fewer parts than those shown in the figure, or combine some parts, or split some parts, or have different part arrangements. The parts shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, random access memories (random access memories, RAMs) in many forms are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and necessary data. The computer program may include instructions. The processor may invoke the instructions in the computer program stored in the memory, to instruct the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit. The interface circuit is configured to receive computer-executable instructions (where the computer-executable instructions are stored in the memory, and may be directly read from the memory, or may be read via another component) and transmit the computer-executable instructions to the processor.

In still another possible implementation, the communication apparatus further includes a communication interface. The communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for detailed working processes of the foregoing system, apparatus, and unit, refer to a corresponding process in the foregoing method embodiment. Details are not described herein again.

It may be understood that the system, apparatus, and method described in this application may alternatively be implemented in other manners. For example, the described apparatus embodiments are merely examples. For example, the unit division is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a multiple network units. Parts displayed as units may be or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement other variations of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and the accompanying drawings are merely example description of this application defined by the accompanying claims, and are considered as any of or all modifications, variations, combinations, or equivalents that cover the scope of this application. It is clear that a person skilled in the art can make various modifications and variations to this application without departing from the scope of this application. This application is intended to cover these modifications and variations of this application provided that they fall within the scope of the following claims and their equivalent technologies of this application.

## Claims

1. A communication method, comprising:
determining, by an access network device in a process of performing transmission of a service over a quality of service QoS flow, that a service feature of the service is updated, wherein an updated service feature is used to determine a target QoS configuration of the QoS flow; or receiving, by the access network device, first information from a terminal device or a first core network device in the service transmission process, wherein the first information is used to determine the target QoS configuration of the QoS flow; and
updating, by the access network device, a QoS configuration of the QoS flow based on the target QoS configuration.

2. The method according to claim 1, wherein the method further comprises:
determining, by the access network device, the target QoS configuration of the QoS flow based on the updated service feature or the first information.

3. The method according to claim 2, wherein
determining, by the access network device, the target QoS configuration of the QoS flow comprises:
determining, by the access network device, a QoS parameter that needs to be updated in the QoS configuration.

4. The method according to claim 2, wherein the method further comprises:
receiving, by the access network device, multiple QoS configurations for the QoS flow from a second core network device; and
determining, by the access network device, the target QoS configuration of the QoS flow comprises:
determining, by the access network device, the target QoS configuration in the multiple QoS configurations.

5. The method according to any one of claims 2 to 4, wherein the method further comprises:
sending, by the access network device, second information to the terminal device and/or the first core network device, wherein the second information indicates the target QoS configuration of the QoS flow, and the target QoS configuration indicated by the second information is determined by the access network device based on the updated service feature.

6. The method according to any one of claims 2 to 4, wherein
when the first information is from the first core network device, the method further comprises:
sending, by the access network device, second information to the terminal device, wherein the second information indicates the target QoS configuration of the QoS flow; or
when the first information is from the terminal device, the method further comprises:
sending, by the access network device, the second information to the first core network device, wherein the second information indicates the target QoS configuration of the QoS flow, wherein
the target QoS configuration indicated by the second information is determined by the access network device based on the first information.

7. The method according to claim 5 or 6, wherein
when the access network device sends the second information to the terminal device, the second information is carried in a packet data convergence protocol PDCP layer of a first data packet, radio resource control RRC signaling, or a media access control control element MAC CE, and the first data packet is a data packet sent by the access network device to the terminal device; or
when the access network device sends the second information to the first core network device, the second information is carried in a general packet radio service rate protocol-user plane GTP-U layer of a second data packet, and the second data packet is a data packet sent by the access network device to the first core network device.

8. The method according to any one of claims 2 to 4, wherein
when the first information is from the first core network device, the method further comprises:
sending, by the access network device, seventh information to the first core network device, wherein the seventh information indicates that the access network device fails to update the QoS configuration of the QoS flow; or
when the first information is from the terminal device, the method further comprises:
sending, by the access network device, the seventh information to the terminal device, wherein the seventh information indicates that the access network device fails to update the QoS configuration of the QoS flow.

9. The method according to claim 8, wherein
when the access network device sends the seventh information to the first core network device, the method further comprises:
sending, by the access network device, eighth information to the first core network device, wherein the eighth information indicates a QoS configuration supported by the access network device, and the QoS configuration indicated by the eighth information is used by the first core network device to update the QoS configuration of the QoS flow; or
when the access network device sends the seventh information to the terminal device, the method further comprises:
sending, by the access network device, the eighth information to the terminal device, wherein the eighth information indicates the QoS configuration supported by the access network device, and the QoS configuration indicated by the eighth information is used by the terminal device to update the QoS configuration of the QoS flow.

10. The method according to any one of claims 2 to 4, wherein the method further comprises:
obtaining, by the access network device, time information, wherein the time information indicates a time period in which the target QoS configuration is valid.

11. The method according to claim 10, wherein the method further comprises:
when the access network device determines that the service feature of the service is updated, sending, by the access network device, the time information to the terminal device and/or the first core network device; or
when the first information is from the terminal device, sending, by the access network device, the time information to the first core network device; or
when the first information is from the first core network device, sending, by the access network device, the time information to the terminal device.

12. The method according to claim 10, wherein
obtaining, by the access network device, the time information comprises:
determining, by the access network device, the time information; or receiving, by the access network device, the time information from the second core network device; or receiving, by the access network device, the time information from the terminal device; or receiving, by the access network device, the time information from the first core network device.

13. The method according to any one of claims 1 to 12, wherein
updating, by the access network device, the QoS configuration of the QoS flow comprises:
performing, by the access network device, resource adjustment, wherein the adjusted resource is used for transmission of the service whose service feature is updated.

14. A communication method, comprising:
determining, by a first communication device in a process of performing transmission of a service over a quality of service QoS flow, that a service feature of the service is updated, wherein the first communication device is a terminal device or a first core network device; and
sending, by the first communication device, first information to an access network device based on the updated service feature, wherein the first information is used to determine a target QoS configuration of the QoS flow.

15. The method according to claim 14, wherein
sending, by the first communication device, the first information to the access network device based on the updated service feature comprises:
determining, by the first communication device, the target QoS configuration of the QoS flow based on the updated service feature; and
sending, by the first communication device, the first information based on the target QoS configuration of the QoS flow, wherein the first information indicates the target QoS configuration of the QoS flow.

16. The method according to claim 15, wherein
determining, by the first communication device, the target QoS configuration comprises:
determining, by the first communication device, a QoS parameter that needs to be updated in a QoS configuration of the QoS flow.

17. The method according to claim 15, wherein the method further comprises:
receiving, by the first communication device, multiple QoS configurations for the QoS flow from a second core network device; and
determining, by the first communication device, the target QoS configuration comprises:
determining, by the first communication device, the target QoS configuration in the multiple QoS configurations.

18. The method according to any one of claims 14 to 17, wherein the method further comprises:
updating, by the first communication device, the QoS configuration of the QoS flow based on the target QoS configuration.

19. The method according to any one of claims 14 to 17, wherein
receiving, by the first communication device, seventh information from the access network device, wherein the seventh information indicates that the access network device fails to update the QoS configuration of the QoS flow, and the access network device updates the QoS configuration of the QoS flow based on the first information.

20. The method according to claim 19, wherein the method further comprises:
receiving, by the first communication device, eighth information from the access network device, wherein the eighth information indicates a QoS configuration supported by the access network device.

21. The method according to claim 20, wherein the method further comprises:
updating, by the first communication device, the QoS configuration of the QoS flow based on the QoS configuration indicated by the eighth information.

22. The method according to any one of claims 14 to 21, wherein the first information is carried in a packet data convergence protocol PDCP layer or a general packet radio service rate protocol-user plane GTP-U layer of a first data packet, radio resource control RRC signaling, or a media access control control element MAC CE, and the first data packet is a data packet sent by the first communication device to the access network device.

23. The method according to any one of claims 14 to 22, wherein
obtaining, by the first communication device, time information, wherein the time information indicates a time period in which the target QoS configuration is valid.

24. The method according to claim 23, wherein the method further comprises:
sending, by the first communication device, the time information to the access network device.

25. A communication method, comprising:
receiving, by a second communication device, second information from an access network device, wherein the second information indicates a target quality of service QoS configuration of a QoS flow, the QoS flow is used for transmission of a service between a terminal device and a first core network device, and the second communication device is the terminal device or the first core network device; and
updating, by the second communication device, a QoS configuration of the QoS flow to the target QoS configuration.

26. The method according to claim 25, wherein the method further comprises:
obtaining, by the second communication device, time information, wherein the time information indicates a time period in which the target QoS configuration is valid.

27. The method according to claim 26, wherein the method further comprises:
restoring, by the second communication device, the QoS configuration of the QoS flow based on the time information.

28. The method according to any one of claims 25 to 27, wherein the second information is carried in a packet data convergence protocol PDCP layer or a general packet radio service rate protocol-user plane GTP-U layer of a first data packet, radio resource control RRC signaling, or a media access control control element MAC CE, and the first data packet is a data packet received by the second communication device from the access network device.

29. A communication apparatus, wherein the communication apparatus comprises a processor, and the processor is configured to run a computer program or computer instructions, to cause the communication apparatus to perform the method according to any one of claims 1 to 13, or cause the communication apparatus to perform the method according to any one of claims 14 to 24, or cause the communication apparatus to perform the method according to any one of claims 25 to 28.

30. A computer-readable storage medium, wherein the computer-readable storage medium stores computer instructions or a computer program; and when the computer instructions or the computer program is run on a computer, the method according to any one of claims 1 to 13 is performed, or the method according to any one of claims 14 to 24 is performed, or the method according to any one of claims 25 to 28 is performed.

31. A computer program product, wherein the computer program product comprises computer instructions; and when a part or all of the computer instructions are run on a computer, the method according to any one of claims 1 to 13 is performed, or the method according to any one of claims 14 to 24 is performed, or the method according to any one of claims 25 to 28 is performed.
